# EUROPEAN PATENT APPLICATION

(11) **EP 4 482 214 A1**
(43) Date of publication of application: **25.12.2024**
(21) Application number: 23773645.9
(22) Date of filing: 13.03.2023
(51) Int. Cl.: H04W 48/02

(54) **LICENSING METHOD AND APPARATUS**

(30) Priority: 21.03.2022 CN 202210276517
(71) Applicant: Huawei Technologies Co., Ltd., Shenzhen, Guangdong 518129 (CN)
(72) Inventor: XU, Shengfeng, Shenzhen, Guangdong 518129 (CN); ZHU, Fangyuan, Shenzhen, Guangdong 518129 (CN); LI, Meng, Shenzhen, Guangdong 518129 (CN)
(74) Representative: Goddar, Heinz J.
(86) International application number: PCT/CN2023/081065
(87) International publication number: WO 2023/179397

(57) **Abstract**

An authorization method and an apparatus are provided. The method includes: An access management network element obtains operation allowed indication information and an authorization condition, where the operation allowed indication information indicates that a terminal device is allowed to provide a connection service, and the authorization condition includes an authorized location range of the connection service and/or an authorized time range of the connection service. The access management network element sends, based on the authorized location range and/or the authorized time range, an authorization result to an access network element accessed by the terminal device, where the authorization result indicates that the terminal device is not allowed to provide the connection service, or the terminal device is allowed to provide the connection service. Even if the operation allowed indication information indicates that the terminal device is allowed to provide the connection service, the access management network element may determine, based on the authorization condition, that the terminal device is not allowed to provide the connection service, to avoid that the terminal device provides the connection service outside the authorized location range and/or the authorized time range.

## Description

### CROSS-REFERENCE TO RELATED APPLICATIONS

This application claims priority to Chinese Patent Application No. 202210276517.8, filed with the China National Intellectual Property Administration on March 21, 2022 and entitled "AUTHORIZATION METHOD AND APPARATUS", which is incorporated herein by reference in its entirety.

### TECHNICAL FIELD

This application relates to the field of communication technologies, and in particular, to an authorization method and an apparatus.

### BACKGROUND

In a registration process of user equipment (user equipment, UE), a unified data management (unified data management, UDM) provides subscription data of the UE for an access and mobility management function (access and mobility management function, AMF). The subscription data of the UE includes operation allowed indication information. The operation allowed indication information indicates that the UE is authorized to provide a connection service, or the UE is not authorized to provide a connection service. The AMF sends a UE-authorized indication or a UE-unauthorized indication to a RAN based only on the operation allowed indication information, so that the RAN controls the connection service of the UE.

A network controls and manages the connection service of the UE based only on the operation allowed indication information. For example, when the operation allowed indication information indicates that the UE is authorized to provide the connection service, the UE may provide the connection service at any location and at any time. This causes poor flexibility of the network controlling and managing a case that the UE provides the connection service.

### SUMMARY

Embodiments of this application provide an authorization method and an apparatus, to flexibly and dynamically control and manage a case that UE provides a connection service.

According to a first aspect, an authorization method is provided, and includes the following process. An access management network element obtains operation allowed indication information and an authorization condition. The operation allowed indication information indicates that a terminal device is allowed to provide a connection service, and the authorization condition includes an authorized location range of the connection service and/or an authorized time range of the connection service. The access management network element sends, based on the authorization condition, an authorization result to an access network element accessed by the terminal device. The authorization result indicates that the terminal device is not allowed to provide the connection service, or the terminal device is allowed to provide the connection service.

Correspondingly, the access network element receives the authorization result, and then controls the connection service of the terminal device based on the authorization result. The terminal device may perform a corresponding operation based on the control of the access network element. For example, the terminal device may release a resource for providing the connection service, or provide the connection service.

In a related technology, the access management network element allows, based only on the operation allowed indication information, the terminal device to provide the connection service at any location and at any time. This may cause poor flexibility of a network controlling and managing a case that UE provides the connection service, and may further cause interference to existing communication caused when the terminal device is outside the authorized location range or the authorized time range. However, in the foregoing solution, in addition to the operation allowed indication information, the access management network element may further obtain the authorization condition. In this way, even if the operation allowed indication information indicates that the terminal device is allowed to provide the connection service, the access management network element may determine, based on the authorization condition, that the terminal device is not allowed to provide the connection service. This can flexibly and dynamically control and manage a case that the UE provides the connection service, to avoid that the terminal device provides a service outside the authorized location range and/or the authorized time range.

For example, the access management network element may send the authorization result to the access network element based on the authorized location range and/or the authorized time range. More specifically, the access management network element may send the authorization result to the access network element based on a location of the terminal device and the authorized location range of the connection service, and/or current time and the authorized time range of the connection service.

In a possible implementation, the access management network element may further send the authorization result to the terminal device.

Correspondingly, the terminal device may receive the authorization result, and then perform a corresponding operation based on the authorization result. For example, the authorization result indicates that the terminal device is not allowed to provide the connection service, and in this case, the terminal device may release the resource for providing the connection service. The authorization result indicates that the terminal device is allowed to provide the connection service, and in this case, the terminal device may provide the connection service.

Optionally, the terminal device may perform a corresponding operation based on the control of the access network element and/or the authorization result.

In a possible implementation, when sending, based on the authorization condition, the authorization result to the access network element accessed by the terminal device, the access management network element may determine the authorization result based on the authorization condition (for example, the authorized location range and/or the authorized time range), and send the authorization result to the access network element.

For example, the access management network element may determine the authorization result based on the location of the terminal device and the authorized location range of the connection service. For another example, the access management network element may determine the authorization result based on the current time and the authorized location range of the connection service.

In a possible implementation, the authorization condition includes the authorized time range of the connection service.

When the access management network element determines the authorization result based on the authorized time range, and the current time is outside the authorized time range, the access management network element may determine that the authorization result indicates that the terminal device is not allowed to provide the connection service. When the access management network element determines the authorization result based on the authorized time range, and the current time is in the authorized time range, the access management network element may determine that the authorization result indicates that the terminal device is allowed to provide the connection service. In this implementation, this can avoid the interference to the existing communication caused by providing the service by the terminal device outside the authorized time range.

In a possible implementation, the authorization condition includes the authorized location range of the connection service.

When the access management network element determines the authorization result based on the authorized location range, and the terminal device is outside the authorized location range, the access management network element may determine that the authorization result indicates that the terminal device is not allowed to provide the connection service. When the access management network element determines the authorization result based on the authorized location range, and the terminal device is in the authorized location range, the access management network element may determine that the authorization result indicates that the terminal device is allowed to provide the connection service. In this implementation, this can avoid the interference to the existing communication caused by providing the service by the terminal device outside the authorized location range.

For example, the terminal device may obtain the location of the terminal device from a location management network element, and determine, based on the location of the terminal device and the authorized location range, whether the terminal device is outside the authorized location range, or is in the authorized location range.

In a possible implementation, the authorization condition includes the authorized location range of the connection service.

When the access management network element determines the authorization result based on the authorized location range, and the terminal device is outside the authorized location range, the access management network element receives notification information sent by a location management network element. The notification information is used to notify that the terminal device is outside the authorized location range, or is in the authorized location range. When the notification information is used to notify that the terminal device is outside the authorized location range, the access management network element determines that the authorization result indicates that the terminal device is not allowed to provide the connection service. When the notification information is used to notify that the terminal device is in the authorized location range, the access management network element determines that the authorization result indicates that the terminal device is allowed to provide the connection service. In this implementation, this can avoid the interference to the existing communication caused by providing the service by the terminal device outside the authorized location range.

For example, the terminal device may send a request message to the location management network element. The request message is used to request whether the terminal device is outside the authorized location range, or is in the authorized location range. The request message may include information about the authorized location range.

In a possible implementation, the authorization condition includes the authorized location range of the connection service.

When the access management network element determines the authorization result based on the authorized location range, the terminal device is outside the authorized location range, and a tracking area in which the terminal device is located is outside a tracking area range corresponding to the authorized location range, the access management network element determines that the authorization result indicates that the terminal device is not allowed to provide the connection service. When the access management network element determines the authorization result based on the authorized location range, the terminal device is outside the authorized location range, and a tracking area in which the terminal device is located is in a tracking area range corresponding to the authorized location range, the access management network element determines that the authorization result indicates that the terminal device is allowed to provide the connection service. In this implementation, this can avoid the interference to the existing communication caused by providing the service by the terminal device outside the authorized location range.

For example, the access management network element may obtain, from a network exposure network element, the tracking area range corresponding to the authorized location range.

In a possible implementation, the connection service includes an integrated access and backhaul IAB service, and the terminal device is an IAB terminal device. Alternatively, the connection service includes a vehicle-mounted relay VMR service, and the terminal device is a VMR device. Alternatively, the connection service includes a relay service, and the terminal device is a relay relay terminal device. A VMR may alternatively be a mobile base station relay (mobile base station relay).

In a possible implementation, the authorized location range includes one or more of the following: an authorized path of the connection service, an authorized area of the connection service, an area in which the connection service is allowed to be provided, or an area in which the connection service is not allowed to be provided.

For example, in an IAB scenario, the authorized location range includes the authorized path of the connection service and the authorized area of the connection service. For another example, in an L2 relay scenario, the authorized location range includes the area in which the connection service is allowed to be provided and the area in which the connection service is not allowed to be provided. According to a second aspect, an authorization method is provided, and includes the following process. A data management network element obtains operation allowed indication information and an authorization condition. The operation allowed indication information indicates that a terminal device is allowed to provide a connection service, and the authorization condition includes an authorized location range of the connection service and/or an authorized time range of the connection service. The data management network element sends an authorization result to an access management network element based on the authorization condition. The authorization result indicates that the terminal device is not allowed to provide the connection service, or the terminal device is allowed to provide the connection service.

In a possible implementation, when sending the authorization result to the access management network element based on the authorization condition, the data management network element may determine the authorization result based on the authorization condition (for example, the authorized location range and/or the authorized time range), and send the authorization result to the access management network element.

For example, the data management network element may determine the authorization result based on a location of the terminal device and the authorized location range of the connection service. For another example, the data management network element may determine the authorization result based on the current time and the authorized location range of the connection service.

In a possible implementation, the authorization condition includes the authorized time range of the connection service.

When the data management network element determines the authorization result based on the authorized time range, and the current time is outside the authorized time range, the data management network element may determine that the authorization result indicates that the terminal device is not allowed to provide the connection service. When the data management network element determines the authorization result based on the authorized time range, and the current time is in the authorized time range, the data management network element may determine that the authorization result indicates that the terminal device is allowed to provide the connection service. In this implementation, this can avoid interference to existing communication caused by providing a service by the terminal device outside the authorized time range.

In a possible implementation, the authorization condition includes the authorized location range of the connection service.

When the data management network element determines the authorization result based on the authorized location range, and the terminal device is outside the authorized location range, the data management network element may determine that the authorization result indicates that the terminal device is not allowed to provide the connection service. When the data management network element determines the authorization result based on the authorized location range, and the terminal device is in the authorized location range, the data management network element may determine that the authorization result indicates that the terminal device is allowed to provide the connection service. In this implementation, this can avoid interference to existing communication caused by providing a service by the terminal device outside the authorized location range.

For example, the terminal device may obtain the location of the terminal device from a gateway mobile location center, and determine, based on the location of the terminal device and the authorized location range, whether the terminal device is outside the authorized location range, or is in the authorized location range.

In a possible implementation, the authorization condition includes the authorized location range of the connection service.

When the data management network element determines the authorization result based on the authorized location range, the data management network element receives notification information sent by a gateway mobile location center. The notification information is used to notify that the terminal device is outside the authorized location range, or is in the authorized location range.

When the notification information is used to notify that the terminal device is outside the authorized location range, the data management network element determines that the authorization result indicates that the terminal device is not allowed to provide the connection service. When the notification information is used to notify that the terminal device is in the authorized location range, the data management network element determines that the authorization result indicates that the terminal device is allowed to provide the connection service. In this implementation, this can avoid interference to existing communication caused by providing a service by the terminal device outside the authorized location range.

For example, the terminal device may send a request message to the gateway mobile location center. The request message is used to request whether the terminal device is outside the authorized location range, or is in the authorized location range. The request message may include information about the authorized location range.

In a possible implementation, the connection service includes an integrated access and backhaul IAB service, and the terminal device is an IAB terminal device. Alternatively, the connection service includes a vehicle-mounted relay VMR service, and the terminal device is a VMR device or a mobile base station relay (mobile base station relay) device. Alternatively, the connection service includes a relay service, and the terminal device is a relay relay terminal device.

In a possible implementation, the authorized location range includes one or more of the following: an authorized path of the connection service, an authorized area of the connection service, an area in which the connection service is allowed to be provided, or an area in which the connection service is not allowed to be provided.

For example, in an IAB scenario, the authorized location range includes the authorized path of the connection service and the authorized area of the connection service. For another example, in an L2 relay scenario, the authorized location range includes the area in which the connection service is allowed to be provided and the area in which the connection service is not allowed to be provided. According to a third aspect, an authorization method is provided, and includes the following process. A terminal device receives a first authorization result sent by an access management network element. The first authorization result indicates that the terminal device is not allowed to provide a connection service. The terminal device releases, based on the first authorization result, a resource for providing the connection service.

In the foregoing solution, the access management network element may send the authorization result to the terminal device, to indicate that the terminal device is not allowed to provide the connection service. This avoids interference to existing communication caused by providing a service by the terminal device outside an authorized location range and/or an authorized time range. In a possible implementation, when releasing the resource for providing the connection service, the terminal device releases an F1 interface. The F1 interface is for information transmission between the terminal device and an access network element.

In a possible implementation, the terminal device may further receive a second authorization result sent by the access management network element. The second authorization result indicates that the terminal device is allowed to provide the connection service. The terminal device may provide the connection service based on the second authorization result. In this implementation, the access management network element may indicate, to the terminal device, that the terminal device is allowed to provide the connection service, to ensure service continuity and reliability.

According to a fourth aspect, an authorization method is provided, and includes the following process. A terminal device receives a connection control message sent by an access network element accessed by the terminal device. The connection control message is used to control the terminal device not to provide a connection service. The terminal device releases, based on the connection control message, a resource for providing the connection service.

In the foregoing solution, the terminal device may release, under control of the access network element, the resource for providing the connection service, to avoid interference to existing communication caused by providing a service by the terminal device outside an authorized location range and/or an authorized time range.

In a possible implementation, when releasing the resource for providing the connection service, the terminal device releases an F1 interface. The F1 interface is for information transmission between the terminal device and the access network element.

In a possible implementation, the connection control message may be further used to control the terminal device to provide the connection service. The terminal device may further provide the connection service based on the connection control message. In this implementation, the terminal device may provide the connection service under the control of the access network element, to ensure service continuity and reliability.

According to a fifth aspect, a communication apparatus is provided. The communication apparatus may be an access management network element, a data management network element, or a terminal device, or may be a chip disposed in the access management network element, the data management network element, or the terminal device. The communication apparatus may implement the method provided in any one of the foregoing aspects.

The communication apparatus includes a corresponding module, unit, or means (means) for implementing the foregoing method. The module, unit, or means may be implemented by using hardware or software, or implemented by hardware executing corresponding software. The hardware or the software includes one or more modules or units corresponding to the foregoing functions.

According to a sixth aspect, a communication apparatus is provided, and includes a transceiver unit. Optionally, the communication apparatus further includes a processing unit. The communication apparatus may implement the method provided in any one of the aspects or the implementations of the aspects.

According to a seventh aspect, a communication apparatus is provided, and includes a processor. The processor may be configured to perform the method provided in any one of the foregoing aspects or the implementations of the aspects. Optionally, the apparatus further includes a memory. The processor is coupled to the memory. The memory is configured to store a computer program or instructions. The processor may execute the program or the instructions in the memory, so that the apparatus performs the method provided in any one of the foregoing aspects or the implementations of the aspects.

According to an eighth aspect, a communication apparatus is provided. The apparatus includes an interface circuit and a logic circuit. The logic circuit is coupled to the interface circuit. The interface circuit may be a code/data read/write interface circuit. The interface circuit is configured to: receive computer-executable instructions (where the computer-executable instructions are stored in a memory, and may be directly read from the memory, or may be read through another component); and transmit the computer-executable instructions to the logic circuit, so that the logic circuit runs the computer-executable instructions, to perform the method provided in any one of the foregoing aspects or the implementations of the aspects.

In some possible designs, the communication apparatus may be a chip or a chip system.

According to a ninth aspect, a communication apparatus is provided, and includes a processor. The processor is coupled to a memory. The processor is configured to: read instructions stored in the memory; receive a signal through a receiver; and transmit the signal through a transmitter, to perform the method provided in any one of the foregoing aspects or the implementations of the aspects.

Optionally, there may be one or more processors, and there may also be one or more memories. Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

The communication apparatus may be a chip, and the processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated in the processor, or may be located outside the processor and independently exist.

According to a tenth aspect, a processor is provided, and includes an input circuit, an output circuit, and a processing circuit. The processing circuit is configured to: receive a signal through the input circuit; and transmit the signal through the output circuit, so that the processor performs the method provided in any one of the foregoing aspects or the implementations of the aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter. In addition, the input circuit and the output circuit may be a same circuit. The circuit separately serves as the input circuit and the output circuit at different moments. Specific implementations of the processor and various circuits are not limited in this application.

According to an eleventh aspect, a communication apparatus is provided, and includes a logic circuit and an input/output interface. The input/output interface is configured to communicate with a module other than the communication apparatus. The logic circuit is configured to run a computer program or instructions, to perform the method provided in any one of the designs of the foregoing aspects. The communication apparatus may be a first access network element, a second access network element, or the access management network element in any one of the foregoing aspects, an apparatus including the access management network element, the data management network element, or the terminal device, or an apparatus, for example, a chip, included in the access management network element, the data management network element, or the terminal device.

Alternatively, the input/output interface may be a code/data read/write interface circuit or a communication interface. The input/output interface is configured to: receive a computer program or instructions (where the computer program or instructions are stored in a memory, and may be directly read from the memory, or may read through another component); and transmit the computer program or instructions to the input/output interface, so that the input/output interface runs the computer program or instructions, to perform the method in any one of the foregoing aspects.

Optionally, the communication apparatus may be the chip.

According to a twelfth aspect, a computer program product is provided. The computer program product includes a computer program (which may also be referred to as code or instructions). When the computer program is run, a computer performs the method provided in any one of the foregoing aspects or the implementations of the aspects.

According to a thirteenth aspect, a computer-readable medium is provided. The computer-readable medium stores a computer program (which may also be referred to as code or instructions). When the computer program is run on a computer, the computer performs the method provided in any one of the foregoing aspects or the implementations of the aspects.

According to a fourteenth aspect, a chip system is provided. The chip system includes a processor and an interface, and is configured to support a communication apparatus in implementing a function provided in any one of the foregoing aspects or the implementations of the aspects. In a possible design, the chip system further includes a memory, configured to store necessary information and data of the foregoing communication apparatus. The chip system may include a chip, or may include a chip and another discrete component.

According to a fifteenth aspect, a chip apparatus is provided. The chip apparatus includes an input interface and/or an output interface. The input interface may implement a receiving function provided in any one of the foregoing aspects or the implementations of the aspects. The output interface may implement a sending function provided in any one of the foregoing aspects or the implementations of the aspects.

According to a sixteenth aspect, a functional entity is provided. The functional entity is configured to implement the method provided in any one of the foregoing aspects or the implementations of the aspects.

According to a seventeenth aspect, a communication system is provided, and includes an access management network element and an access network element that are configured to perform the method in the first aspect.

Optionally, the communication system may further include a terminal device configured to perform the method in the third aspect and/or the fourth aspect.

According to an eighteenth aspect, a communication system is provided, and includes a data management network element and an access management network element that are configured to perform the method in the second aspect.

Optionally, the communication system may further include a terminal device and an access network element that are configured to perform the method in the third aspect and/or the fourth aspect.

For technical effects brought by any one of the implementations of the fifth aspect to the eighteenth aspect, refer to the technical effects brought by the first aspect to the fourth aspect. Details are not described herein again.

### BRIEF DESCRIPTION OF DRAWINGS

FIG. 1A is a diagram of an architecture of a 5G communication system;
FIG. 1B is a diagram of an IAB architecture;
FIG. 2 is a diagram of a mobile IAB architecture;
FIG. 3 is a schematic flowchart of network access of an IAB-node;
FIG. 4 is a diagram of an L2 relay architecture;
FIG. 5 is a schematic flowchart of connection setup of remote UE;
FIG. 6 is a schematic flowchart of initiating UE positioning;
FIG. 7 is a schematic flowchart of terminating UE positioning;
FIG. 8A is a diagram of an authorization process according to an embodiment of this application;
FIG. 8B is a diagram of another authorization process according to an embodiment of this application;
FIG. 9 is a schematic flowchart of authorization in an IAB scenario according to an embodiment of this application;
FIG. 10 is a schematic flowchart of authorization in an L2 relay scenario according to an embodiment of this application;
FIG. 11 is a diagram of an authorization process according to an embodiment of this application;
FIG. 12 is a schematic flowchart of authorization in an IAB scenario according to an embodiment of this application;
FIG. 13 is a diagram of a structure of a communication apparatus according to an embodiment of this application;
FIG. 14 is a diagram of a structure of a communication apparatus according to an embodiment of this application; and
FIG. 15 is a diagram of a structure of a communication apparatus according to an embodiment of this application.

### DESCRIPTION OF EMBODIMENTS

The following describes in detail embodiments of this application with reference to the accompanying drawings of the specification.

The technical solutions in embodiments of this application may be applied to a mobile communication system. For example, the mobile communication system may be a 4th generation (4th Generation, 4G) communication system (for example, a long term evolution (long term evolution, LTE) system), a 5th generation (5th generation, 5G) mobile communication communication system (for example, a new radio (new radio, NR) system), or a future mobile communication system such as 6G.

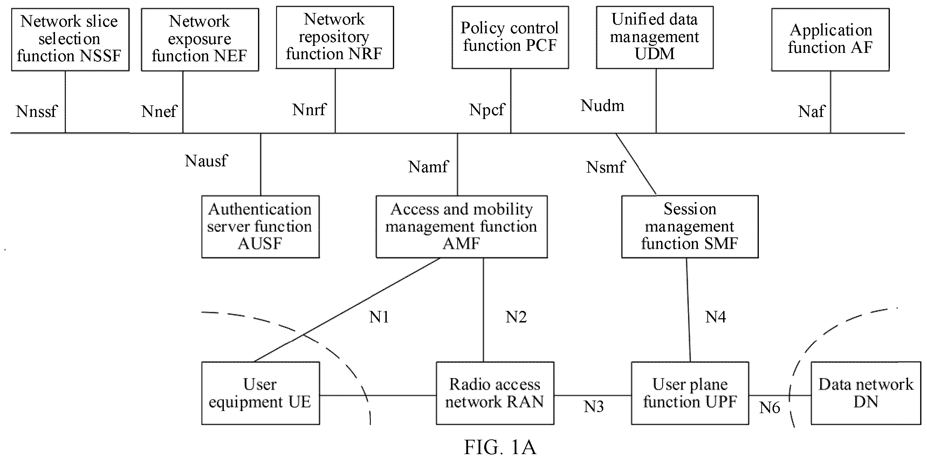

A 3GPP standard group formulates a next generation mobile communication network architecture (next generation system). The next generation mobile communication network architecture is referred to as a 5G network architecture. FIG. 1A is a diagram of a 5G network architecture, including a terminal device part, a network device part, and a data network (data network, DN) part.

The terminal device part usually includes user equipment (user equipment, UE). In a wireless network, the UE is a device having a wireless transceiver function, and may communicate with one or more core network (core network, CN) elements through an access network element in a radio access network (radio access network, RAN).

For example, the user equipment may also be referred to as an access terminal, a terminal, a subscriber unit, a subscriber station, a mobile station, a remote station, a remote terminal, a mobile device, a user terminal, a user agent, or a user apparatus. The user equipment may be deployed on land, and include indoor user equipment, outdoor user equipment, handheld user equipment, or vehicle-mounted user equipment, may be deployed on a water surface (for example, on a ship), or may be deployed in the air (for example, on an airplane, a balloon, or a satellite). The user equipment may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, personal digital processing (personal digital assistant, PDA), or the like. Alternatively, the user equipment may be a handheld device or a computing device having a wireless communication function, another device connected to a wireless modem, a vehicle-mounted device, a wearable device, an uncrewed aerial vehicle device, a terminal in an internet of things (which is also referred to as an internet of things device), a terminal in an internet of vehicles, a terminal in a 5G network, a terminal in any form in a future network, relay user equipment, a mobile termination (mobile termination, MT), a terminal in a future evolved public land mobile network (public land mobile network, PLMN), or the like. The relay user equipment may be, for example, a 5G residential gateway (residential gateway, RG). For example, the user equipment may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), or a wireless terminal in a smart home (smart home). A type, a category, or the like of the terminal device is not limited in this embodiment of this application.

The network device part includes a network exposure function (network exposure function, NEF), a network repository function (network repository function, NRF), a policy control function (policy control function, PCF), a UDM, an authentication server function (authentication server function, AUSF), an AMF, a session management function (session management function, SMF), a user plane function (user plane function, UPF), an access network (access network, AN), a network slice selection function (network slice selection function, NSSF), and the like. In the network device, a part other than the access network part may be referred to as a core network part. The core network part includes the user plane function and a control plane function. The user plane function is mainly responsible for forwarding a data packet, controlling quality of service (quality of service, QoS), collecting statistics on charging information, and the like. The control plane function is mainly responsible for service procedure interaction, and delivering a data packet forwarding policy, a QoS control policy, and the like to the user plane function.

The data network DN may also be referred to as a packet data network (packet data network, PDN), and may be usually deployed outside an operator network, for example, a third-party network. For example, the operator network may access a plurality of DNs, and a plurality of services may be deployed on the DN, to provide services such as a data service and/or a voice service for the UE. The foregoing third-party may be a service party other than the operator network and the UE, and may provide services such as another data service and/or another voice service for the UE. A specific representation form of the third-party may be specifically determined based on an actual application scenario. This is not limited herein.

An application function (application function, AF) may or may not belong to the operator network. However, usually, the AF belongs to the third-party rather than the operator network, but has a protocol relationship with the operator network. The AF is a function network element configured to provide various services, and may support a function of affecting data routing by using an application, access the network exposure function NEF, interact with a policy framework for policy control, and the like.

For example, the following briefly describes a network function in the operator network.

The RAN is a subnet of the operator network, and is an implementation system between a service node (or the network function) and the UE that are in the operator network. To access the operator network, the UE first passes through the RAN, and then is connected to the service node in the operator network via the RAN. In other words, the RAN exists between the UE and the core network part, and provides a communication connection between the UE and the core network part. The RAN in this embodiment of this application may refer to the access network itself or the access network element. This is not distinguished herein. The access network element is a device that provides the wireless communication function for the UE, and may also be referred to as an access network device, an AN device, or the like. The access network element includes but is not limited to a next generation base station or a next generation NodeB (generation NodeB, gNB) in a 5G system, an evolved NodeB (evolved NodeB, eNB) in an LTE system, a radio network controller (radio network controller, RNC), a NodeB (NodeB, NB), a base station controller (base station controller, BSC), a base transceiver station (base transceiver station, BTS), a home base station (home NodeB, HNB), an indoor baseband processing unit (building base band unit, BBU), a transmitting and receiving point (transmitting and receiving point, TRP), a transmission point (transmission point, TP), a small cell device (pico), a mobile switching center, a network device in the future network, or the like. It may be understood that a specific type of the access network device is not limited in this application. In systems using different radio access technologies, devices having a function of the access network device may have different names.

Optionally, in some deployments of the access device, the access device may include a central unit (central unit, CU), a distributed unit (distributed unit, DU), and the like.

The NEF is a control plane function provided by an operator, and provides a framework, authentication, and an interface related to network capability exposure and transfers information between a network function in the 5G system and another network function. The NEF exposes an external bidirectional interface of a capability of a network to the third-party in a secure manner. When another network function (for example, the AF) needs to communicate with the third-party network, the NEF may serve as a relay for communication with a third-party network entity. The NEF may alternatively serve as a translator of identification information of a subscribed user and a translator of identification information of a third-party network function. For example, when sending a subscription permanent identifier (subscription permanent identifier, SUPI) of the subscribed user from the PLMN to the third-party, the NEF may translate the subscriber permanent identifier, the SUPI into an external generic public subscription identifier (generic public subscription identifier, GPSI) corresponding to the SUPI. On the contrary, the NEF forwards external information to the PLMN network, to avoid another network function in the PLMN to directly contact the outside.

The NRF is a control plane function provided by the operator, and may be configured to maintain real-time information of all network function services in the network.

The PCF is a control plane function provided by the operator, and is configured to generate and manage user, session, and QoS flow processing policies. The PCF supports a unified policy framework to govern network behavior and provide a policy rule, subscription information related to policy decision, and the like for another control function.

The UDM is a control plane function provided by the operator and is responsible for storing information such as a security context (security context) and subscription data of the subscribed user in the PLMN. The subscribed user in the operator network may be specifically a user using a service provided by the operator network, for example, a user using a terminal device SIM card of China Telecom or a user using a terminal device SIM card of China Mobile. For example, the security context may be a cookie (cookie) or a token (token) stored on a local terminal device (for example, a mobile phone). The subscription data of the subscribed user may be a supporting service of the terminal device SIM card, for example, a traffic package of a mobile phone SIM card.

The AUSF is a control plane function provided by the operator, and is usually for primary authentication, namely, network authentication between the UE (the subscribed user) and the operator network.

The AMF is a control plane network function provided by the operator network, and is responsible for access control and mobility management for the UE to access the operator network, for example, functions such as registration management, connection management, reachability management, and mobility management, allocation of a temporary user identifier, and user authentication and authorization.

The SMF is a control plane network function provided by the operator network, and is responsible for managing a protocol data unit (protocol data unit, PDU) session of the UE. The PDU session is a channel for transmission of a PDU, and the terminal device needs to perform transmission of data with the DN through the PDU session. The SMF may be responsible for setup, maintenance, deletion, and the like of the PDU session. The SMF includes functions related to a session, for example, session management (for example, session setup, modification, and release, including tunnel maintenance between the UPF and the AN), selection and control of the UPF, service and session continuity (service and session continuity, SSC) mode selection, and roaming.

The UPF is a gateway provided by the operator and a gateway for communication between the operator network and the DN. The UPF includes functions related to a user plane, for example, data packet routing and transmission, packet detection, service usage reporting, QoS processing, lawful interception, uplink packet detection, and downlink data packet storage.

The NSSF is a control plane network function provided by the operator network, and is responsible for determining a network slice instance, selecting the AMF, and the like.

In some scenarios, the core network part may further include a location management function (location management function, LMF) for obtaining location information of the UE by using a specific positioning technology. The positioning technology includes but is not limited to a downlink time difference of arrival (observed time difference of arrival, OTDOA) positioning technology, an uplink time difference of arrival (uplink time difference of arrival, UTDOA) positioning technology, a timing advance (timing advance, TA) positioning technology, an angle of arrival (angle of arrival, AoA) positioning technology, or another positioning technology.

In some scenarios, the core network part may further include a gateway mobile location center (gateway mobile location center, GMLC). The GMLC is mainly responsible for opening a location service to an external location service (location service, LCS) client or the AF.

In FIG. 1A, Nnef, Nausf, Nnrf, Npcf, Nudm, Naf, Namf, Nsmf, Nnssf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that names of network functions and names of interfaces between the network functions in FIG. 1A are merely examples. During specific implementation, the interface names of the system architecture may alternatively be other names. This is not limited in this application.

Embodiments of this application may be applied to an IAB scenario and a layer-2 (Layer-2, L2) relay (relay) scenario.

### Scenario 1: IAB scenario

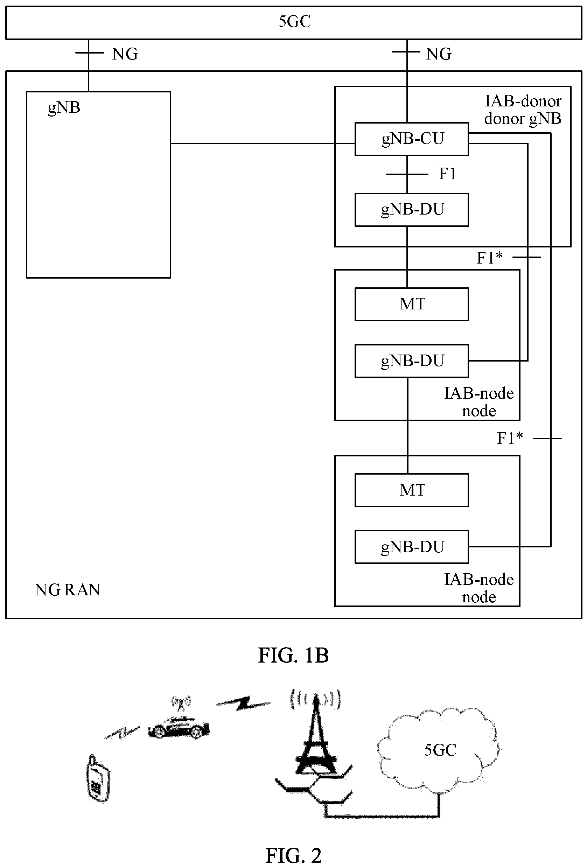

An IAB base station is proposed in 5G NR research. The IAB base station is also referred to as an IAB-node (IAB-node). The IAB-node integrates a wireless access link and a wireless backhaul link. The wireless access link is a communication link between UE and the IAB-node. The wireless backhaul link is a communication link between IAB-nodes, and is mainly for data backhaul. The IAB-node does not need a wired transmission network for the data backhaul. Therefore, the IAB-node has a lower deployment requirement for the wired transmission network, and may be deployed in a scenario in which the wired transmission network is difficult to be deployed, such as an outdoor scenario or an indoor scenario. The IAB-node includes an MT function and a gNB-DU function. After the IAB-node is started, the MT function of the IAB-node accesses a network through cell selection. Therefore, it is necessary to ensure that the IAB-node can access an IAB network, to implement the functions of the IAB-node. FIG. 1B is a diagram of an IAB architecture. A next generation (next generation, NG) RAN communicates with a 5G core (5G core, 5GC) network through NG interfaces. An NR RAN includes a gNB, IAB-nodes, and an IAB-donor (donor) gNB. The IAB-donor gNB (referred to as an IAB-donor for short) includes a gNB-CU function and a gNB-DU function. A gNB-CU mainly processes a non-real-time wireless high-layer protocol stack function, for example, a radio resource control (radio resource control, RRC) function or a packet data convergence protocol (packet data convergence protocol, PDCP) function. The gNB-DU function mainly processes a physical layer function and a layer-2 function having a high real-time requirement, for example, the physical layer (physical layer, PHY) function, a media access control layer (media access control, MAC) function, or a radio link control (radio link control, RLC) layer function. The gNB-DU in the IAB-node may serve as a Uu interface termination point of a backhaul link between the IAB-node and the IAB-donor, or between the IAB-node and another IAB-node.

FIG. 2 is a diagram of a mobile IAB architecture. Serving as a vehicle-mounted relay (vehicle-mounted relay, VMR) or a mobile base station relay (mobile base station relay), a relay (relay) (where the relay moves with a vehicle) installed in the vehicle supports a function related to a wireless relay, and supports access and backhaul by using NR, in other words, supports wireless backhaul in serving as service access and supports to provide wireless access for UE. In comparison with an IAB mechanism shown in FIG. 1B, the VMR has mobility, and the IAB-node in FIG. 1B is a fixed relay on the ground. Therefore, the VMR may alternatively be understood as a mobile (mobile) IAB-node. A donor RAN on the ground is a RAN node responsible for providing a core network interface for the UE and providing a wireless backhaul function for the VMR. Generally, a donor RAN is installed on the ground, and has no mobility.

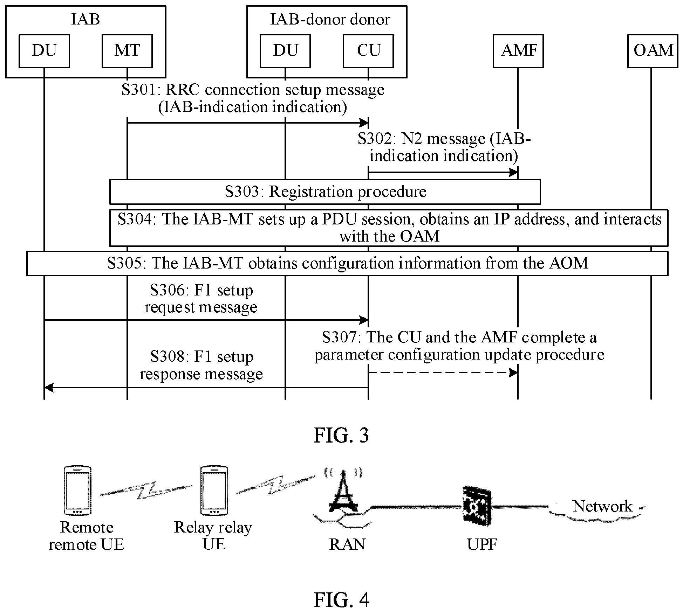

FIG. 3 is a diagram of network access of an MT of an IAB-node (referred to as an IAB-MT for short). The following steps are included.

S301: The IAB-MT sends an RRC connection setup message to an IAB-donor.

The RRC connection setup message includes an IAB-indication (indication).

In S301, the IAB-node initiates an RRC connection setup procedure, to access a 5G system. Specifically, the IAB-MT sends the RRC connection setup message to a donor-CU of the IAB-donor.

S302: The LAB-donor sends an N2 message to an AMF.

The N2 message includes the lAB-indication.

S303: The IAB-MT completes a registration procedure.

Specifically, a UDM provides an IAB-operation allowed indication (IAB-operation allowed indication) to the AMF. The IAB-operation allowed indication serves as a part of access and mobility subscription data (access and mobility subscription data). The AMF sends an IAB-node authorized indication (IAB-node authorized indication) to a RAN. The IAB-node authorized indication may indicate "authorized (authorized)" or "not authorized (not authorized)". The RAN stores the IAB-node authorized indication. After the registration procedure is completed, the IAB-node remains in connected state.

S304: The IAB-MT sets up a protocol data unit (protocol data unit, PDU) session, obtains an internet protocol (internet protocol, IP) address, and interacts with an operation, administration, and maintenance (operation administration and maintenance, OAM).

In S304, the PDU session of the IAB-MT provides, over a 5G network, an IP transmission connection between the IAB-node and the OAM.

S305: The IAB-MT obtains configuration information from the OAM.

The configuration information includes a cell global identifier (cell global identifier, CGI), a physical cell identifier (physical cell identifier, PCI), a tracking area code (tracking area code, TAC), and the like.

S306: An IAB-DU (in other words, a DU of the IAB-node) sends an F1 setup request (F1 Setup Request) message to the RAN.

The F1 setup request message is used to request to set up an F1 interface (F1 interface), and includes the CGI, the PCI, the TAC, and the like.

S307: The donor-CU of the IAB-donor and the AMF complete a parameter configuration update procedure.

For example, the donor-CU and the AMF complete update of a tracking area (tracking area, TA) list.

S308: The donor-CU of the IAB-donor sends an F1 setup response message to the IAB-DU, to complete the setup of the F1 interface.

The donor-CU determines, based on the IAB-node authorized indication received from the AMF, whether to accept the setup of the F1 interface. If the IAB-node authorized indication indicates authorization, the donor-CU accepts the setup of the F1 interface. If the IAB-node authorized indication indicates non-authorization, the donor-CU does not accept the setup of the F1 interface.

### Scenario 2: L2 relay (Relay) scenario

When UE is located outside network coverage, or a communication signal between UE and a RAN is poor, the UE, serving as remote (Remote) UE, may access a network with assistance of relay UE, to implement communication between the remote UE and the network. FIG. 4 is a diagram of an L2 relay architecture. In a 5G system, indirect communication supports an L2 relay communication manner. The indirect communication is a communication mode in which remote UE accesses a network via relay UE. The relay UE forwards uplink and downlink data of the remote UE based on a configuration of an access stratum layer (access stratum layer, AS layer), so that the remote UE accesses a RAN and communicates with 5GC. An L2 relay may also be referred to as a layer-2 terminal-to-network relay (L2 UE-to-Network Relay, L2 U2N Relay).

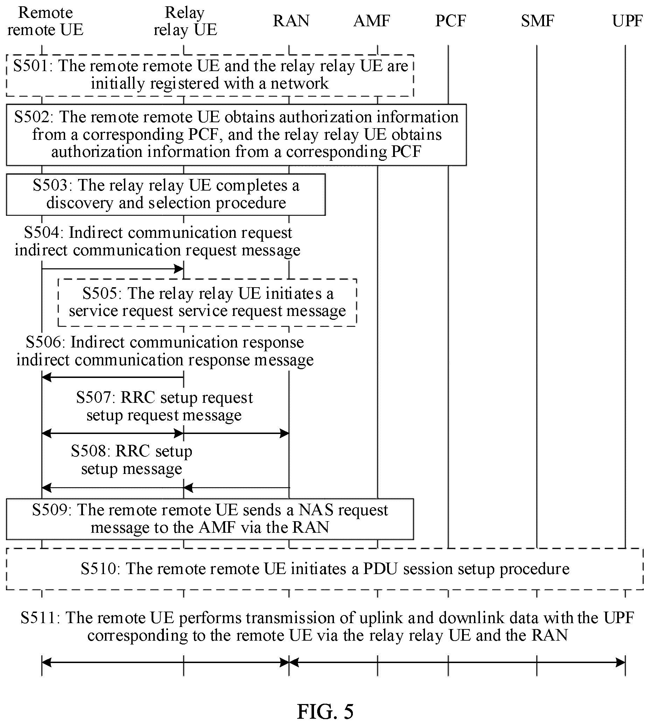

FIG. 5 shows a connection setup procedure of remote UE in an L2 relay scenario. The following steps are included.

S501: The remote UE and relay UE are initially registered with a network.

When the remote UE is not directly connected to the network, the remote UE may not be registered, and needs to be registered in subsequent S509.

In an initial registration process of the relay UE, an AMF obtains 5G proximity service (proximity services, ProSe) subscription data (5G ProSe subscription data) from a UDM. The 5G ProSe subscription data includes that UE is authorized to serve as an L2 relay. The AMF sends, to a RAN, indication information that the UE is authorized to serve as the L2 relay.

S502: The remote UE obtains authorization information from a PCF corresponding to the remote UE, and the relay UE obtains authorization information from a PCF corresponding to the relay UE. A PCF corresponding to UE may be understood as a PCF responsible for providing a UE policy during registration of the UE.

The authorization information obtained by the remote UE includes that the UE is authorized to perform indirect communication, in other words, serve as the remote UE.

The authorization information obtained by the relay UE includes that the UE is authorized to perform indirect communication, in other words, serve as the relay UE.

If being not registered with the network, the remote UE may use preconfigured authorization information.

S503: The relay UE completes a discovery and selection procedure.

S504: The remote UE sends an indirect communication request (indirect communication request) message to the relay UE, to indicate the relay UE to set up the indirect communication.

S505: The relay UE initiates a service request (Service Request) message.

S505 is an optional step. If being not in connected (RRC connected) state, the relay UE initiates the service request message, so that the relay UE can enter the connected state.

S506: The relay UE returns an indirect communication response (indirect communication response) message to the remote UE.

After S504 to S506, the remote UE sets up a PC5 connection to the relay UE, and the relay UE is in connected state.

S507: The remote UE sends an RRC setup request (Setup Request) message to the RAN via the relay UE.

S508: The RAN sends an RRC setup message to the remote UE via the relay UE.

The relay UE may forward uplink and downlink signaling of the remote UE based on a configuration of an AS layer, so that the remote UE accesses the RAN, to complete setup of an RRC connection between the remote UE and the RAN. If the relay UE is not authorized to serve as L2 relay UE, the RAN may reject access of the remote UE via the relay UE.

S509: The remote UE sends a non-access stratum (non-access stratum, NAS) request message to the AMF via the RAN.

If the remote UE is not registered in S501, the NAS message is an initial registration message. If the remote UE has been registered in S501, the NAS message is a service request message. In the service request message, the remote UE may select to activate a PDU session.

An AMF corresponding to the UE may be understood as an AMF responsible for mobility management of the UE during the registration of the UE. To be specific, an AMF corresponding to the remote UE is an AMF responsible for mobility management of the remote UE during registration of the remote UE, and an AMF corresponding to the relay UE is an AMF responsible for mobility management of the relay UE during registration of the relay UE.

S510: The remote UE initiates a PDU session setup procedure.

S511: The remote UE performs transmission of uplink and downlink data with a UPF corresponding to the remote UE via the relay UE and the RAN.

The relay UE forwards uplink and downlink data of the remote UE based on the configuration of the AS layer. A protocol stack between the relay UE and the RAN supports an adaptation layer (adaptation layer). The adaptation layer is used by the relay UE and the RAN to distinguish between data of remote UEs.

In a process in which the relay UE is registered with the network, the AMF obtains the 5G ProSe subscription data from the UDM. The 5G ProSe subscription data includes that the UE is authorized to serve as the L2 relay. The AMF sends, to the RAN, the indication information that the UE is authorized to serve as the L2 relay. After learning that the UE is authorized to serve as the L2 relay, the AMF does not actively trigger a connection release procedure. Connection release is controlled by the RAN. This is because only the RAN knows whether the UE currently provides an L2 relay service. When the L2 relay service is provided, a connection of the relay UE should not be released.

In this scenario, the L2 relay UE has two functional roles. One is to perform transmission of service data of the relay UE, and the other is to provide a relay service for the remote UE to perform transmission of service data of the remote UE.

A service area restriction is defined based on subscription data such as access and mobility subscription data or the 5G ProSe subscription data. In other words, an area in which the UE is allowed or not allowed to initiate communication with the network is defined. In an allowed area (Allowed Area), the UE can normally communicate with the network. In a non-allowed area (Non-Allowed Area), the UE cannot initiate a service request procedure or interaction of signaling related to general session management with the network. When being in the non-allowed area, the UE needs to respond to paging initiated by a core network, a NAS notification procedure, and paging initiated by a RAN node.

The service area restriction may include one or more complete TAs or all TAs in a public land mobile network (public land mobile network, PLMN). The service area restriction is included in subscription data that is of the UE and that is stored in the UDM, and may be represented by a TA identifier and/or other geographic information (for example, latitude and longitude, or a postal code). If the geographical location information is used, before sending service area restriction information to a PCF, the RAN, and the UE, the AMF first maps the geographical location information to a TA. In a registration process, if the AMF does not store context of a service area restriction of the UE, the AMF may obtain the information from the UDM and may further adjust the information via the PCF. The network may update the service area restriction by using a common UE configuration update procedure.

When a size of a service area restriction allocated by the AMF to the UE is limited (for example, only one or more complete TAs are included), an allowed area that is included in the service area restriction and that is provided by the AMF to the UE may be preconfigured, or may be dynamically allocated by the AMF (for example, dynamic TA control is performed with change of a UE location). The AMF provides the service area restriction in a form of the TA. The service area restriction may be a part of a complete list stored in the UE subscription data, or may be provided by the PCF for the UE in a registration procedure. When the UE is in the non-allowed area, the AMF does not allow the UE to perform the service request procedure or interaction of the signaling related to the general session management with the network. In other words, the UE cannot perform a service-related procedure, but another mobility-related signaling procedure is allowed.

When providing the service area restriction, the network does not provide the allowed area and the non-allowed area for the UE at the same time. If the network provides the non-allowed area for the UE, a TA that is in the PLMN and that is not in a list is considered as an area belonging to the allowed area.

A UE location estimation result is determined by using a procedure of initiating positioning and a procedure of terminating positioning, and further it can be determined that the UE is in the allowed area or the non-allowed area.

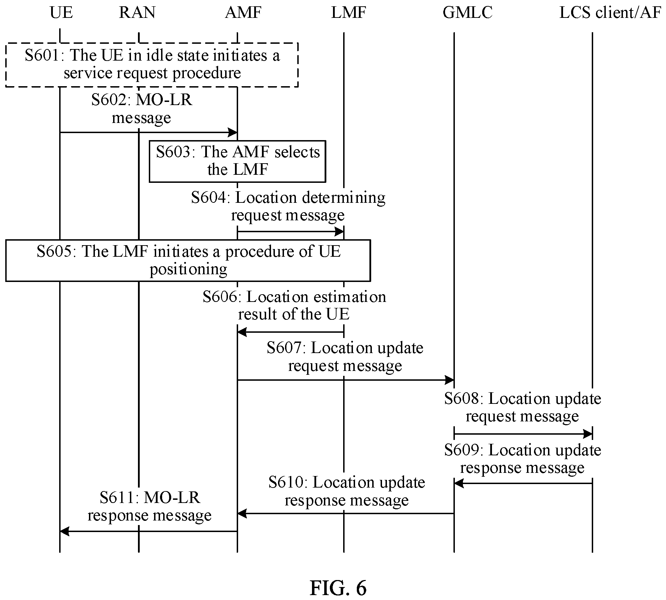

FIG. 6 shows a procedure of initiating UE positioning. The following steps are included.

S601: UE in idle state initiates a service request procedure, to complete a signaling connection between the UE and an AMF.

S602: The UE sends a mobile originated location request (mobile originated location request, MO-LR) message.

The MO-LR message may be carried in an uplink NAS transport (UL NAS TRANSPORT) message.

The UE may request different location service types: (A) location estimation of the UE; (B) sending the location estimation of the UE to an LCS client or an AF; and (C) location assistance information. For types (A) and (B), the UL NAS TRANSPORT message may further include LCS quality of service (quality of service, QoS) information such as positioning accuracy (accuracy), response time (response time), and an LCS QoS class (class). The LCS QoS class may include a best effort class (Best Effort Class) and an assured class (Assured Class). For (B), the UL NAS TRANSPORT message may further include an LCS client identifier or an AF identifier, and a GMLC address allocated by the AMF.

S603: The AMF selects an appropriate LMF.

S604: The AMF sends a location determining request (Nlmf_Location_DetermineLocation Request) message to the LMF.

The message includes an identifier of a cell serving the UE (serving cell identifier), and indication information or location assistance data for requesting UE location information.

S605: The LMF initiates a procedure of positioning the UE.

Specifically, the LMF obtains positioning data by interacting with a RAN and the UE, and obtains a location estimation result of the UE through calculation.

In S605, a positioning technology used by the LMF includes but is not limited to an OTDOA positioning technology, a UTDOA positioning technology, a TA positioning technology, an AoA positioning technology, or another positioning technology.

S606: When the location estimation result meets the requested LCS QoS information, the LMF returns the location estimation result of the UE to the AMF.

S607: The AMF sends a location update request (Ngmlc_Location_LocationUpdate Request) message to a GMLC.

The message includes the location estimation result, an identifier of the UE, and the LCS QoS information requested by the UE.

S608: The GMLC sends the location update request message to the LCS client or the AF.

The location update request message includes the location estimation result of the UE.

S609: The LCS client or the AF returns a location update response (Ngmlc_Location_LocationUpdate Response) message.

If the UE roams, the GMLC includes two entities: a visited GMLC (visited GMLC, VGMLC) and a home GMLC (home GMLC, HGMLC). If the UE does not roam, a VGMLC and an HGMLC are a same entity.

S608 and S609 are optional steps. For example, when the UE does not request the location service type (B), S608 and S609 are skipped.

S610: The GMLC sends the location update response message to the AMF.

S611: The AMF sends an MO-LR response message to the UE.

The MO-LR response message may be carried in a downlink NAS transport (DL NAS TRANSPORT) message. The DL NAS TRANSPORT message may further include the location estimation result and whether the location estimation result meeting the requested positioning accuracy.

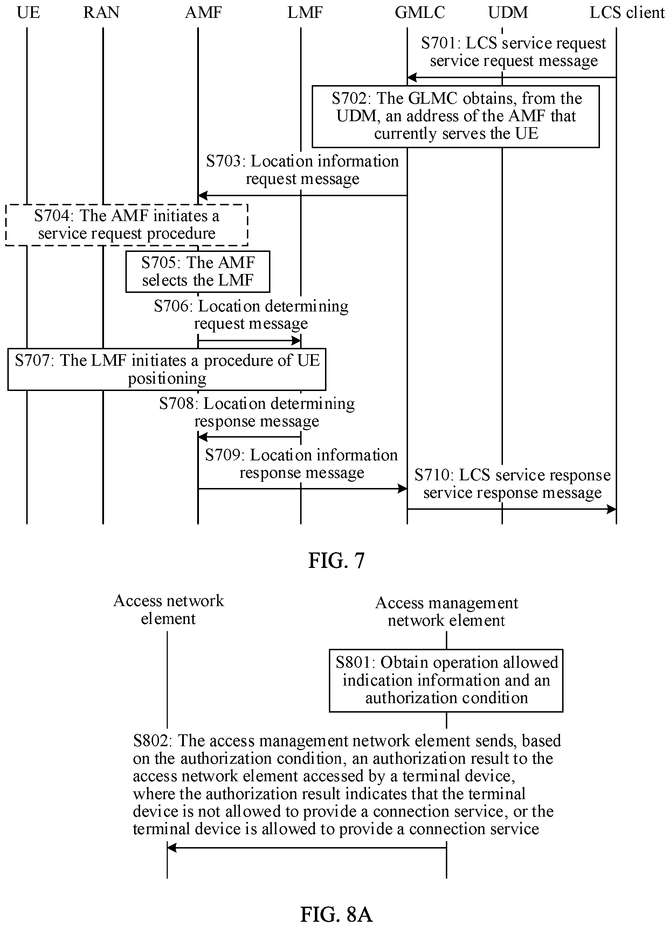

FIG. 7 shows a procedure of terminating UE positioning. The following steps are included. S701: An LCS client sends an LCS service request message to a GMLC, where the LCS service request message is used to request to obtain a location of UE.

The LCS service request message includes an identifier of the UE and required QoS (required QoS). The identifier of the UE may be a generic public subscription identifier (generic public subscription identifier, GPSI) or a subscription permanent identifier (subscription permanent identifier, SUPI).

S702: The GLMC obtains, from a UDM, an address of an AMF that currently serves the UE. S703: The GLMC sends a location information providing request (Namf_Location_ProvidePositioningInfo Request) message to the AMF, where the location information providing request message is used to request to obtain the location of the UE.

The GLMC obtains an LCS privacy profile (LCS privacy profile) from the UDM and determines, based on the LCS privacy profile, that the LCS client is authorized to obtain the location of the UE. The GLMC requests to obtain the location of the UE from the AMF.

S704: If the UE is in idle state, the AMF initiates a service request procedure, to complete a signaling connection between the UE and the AMF.

S704 is an optional step.

S705: The AMF selects an LMF.

S706: The AMF sends an Nlmf_Location_DetermineLocation Request message to the LMF, where the Nlmf_Location_DetermineLocation Request message is used to request a current location of the UE.

The Nlmf_Location_DetermineLocation Request message may further include a cell identifier of the UE.

S707: The LMF initiates a procedure of positioning the UE.

The LMF obtains positioning data by interacting with the UE via a RAN, and obtains a location estimation result of the UE through calculation.

In S707, a positioning technology used by the LMF includes but is not limited to an OTDOA positioning technology, a UTDOA positioning technology, a TA positioning technology, an AoA positioning technology, or another positioning technology.

S708: The LMF sends an Nlmf_Location_DetermineLocation Response message to the AMF, where the Nlmf_Location_DetermineLocation Response message includes the current location of the UE and implemented accuracy.

S709: The AMF sends an Namf_Location_ProvidePositioninglnfo Response message to the GMLC, where the Namf_Location_ProvidePositioninglnfo Response message includes the current location of the UE and the implemented accuracy.

S710: The GMLC sends an LCS service response message to the LCS client, where the LCS service response message includes the current location of the UE and the implemented accuracy. In conclusion, in the foregoing Scenario 1 and Scenario 2, the network controls and manages the connection service of the UE based only on the operation allowed indication information (for example, the IAB-node authorized indication in Scenario 1 or the 5G ProSe subscription data in Scenario 2). For example, when the operation allowed indication information indicates that the UE is authorized to provide the service, the UE may provide the connection service at any location and at any time. This causes poor flexibility of the network controlling and managing a case that the UE provides the connection service.

In view of this, an embodiment of this application provides an authorization method. The authorization method is applicable to the foregoing Scenario 1 and Scenario 2. FIG. 8A is a diagram of an authorization method according to an embodiment of this application. The method includes the following steps.

S801: An access management network element obtains operation allowed indication information and an authorization condition.

The operation allowed indication information indicates that a terminal device is allowed to provide a connection service.

The authorization condition is used to determine whether the terminal device is allowed to provide the connection service. For example, the authorization condition includes an authorized location range of the connection service and/or an authorized time range of the connection service.

S802: The access management network element sends, based on the authorization condition, an authorization result to an access network element accessed by the terminal device. Correspondingly, the access network element receives the authorization result.

The authorization result indicates that the terminal device is not allowed to provide the connection service, or the terminal device is allowed to provide the connection service.

According to the foregoing solution, the access management network element may determine, based on the obtained authorization condition, whether a location of the terminal device and/or current time meet/meets the authorization condition, and send a corresponding authorization result to the access network element accessed by the terminal device. Even if the operation allowed indication information allows the terminal device to provide the connection service, the access management network element does not allow the terminal device to provide the connection service when the authorization condition is not met. This can flexibly and dynamically control and manage a case that the terminal device provides the connection service. According to the foregoing solution, this can avoid that a service is provided outside the authorized location range and/or the authorized time range, to avoid interference to existing communication to some extent.

In an implementation, the access management network element may obtain the operation allowed indication information and the authorization condition from a data management network element (for example, a UDM) or a policy control network element (for example, a PCF). For example, the terminal device initiates a registration procedure, and accesses a network via the access management network element. The access management network element may obtain subscription data from the data management network element. The subscription data includes the operation allowed indication information and the authorization condition. For the registration procedure of the terminal device, refer to S301 to S303 in FIG. 3. The subscription data may be access and mobility subscription data (for example, in an IAB scenario) or 5G ProSe subscription data (for example, in an L2 relay scenario). For example, when a PCF network element sends an access management policy to the access management network element, the access management policy includes the operation allowed indication information and the authorization condition.

In some cases, the operation allowed indication information indicates that the terminal device is not allowed to provide the connection service. The subscription data may not include the authorization condition. The access management network element determines, based on the operation allowed indication information, that the terminal device is not allowed to provide the service.

Alternatively, in some cases, the access management network element may obtain no operation allowed indication information, and does not allow, by default, the terminal device to provide the service.

The connection service includes but is not limited to an IAB service, a VMR service, a relay service, or the like. An IAB terminal device may provide the IAB service. In other words, the terminal device may be IAB-UE/an IAB-MT. Specifically, the IAB terminal device is the IAB-MT. A VMR device or a mobile base station relay device may provide the VMR service. In other words, the terminal device may be the VMR device or the mobile base station relay. The VMR device serves as a relay between the terminal device and the network (for example, a 5G network), for example, provides an access link for the UE, and is connected to the network via an IAB-donor in a wireless manner. When being installed in a mobile vehicle, the mobile base station relay may serve UE located inside the vehicle (or entering the vehicle) or outside the vehicle (or leaving the vehicle). A relay terminal device may provide the relay service. In other words, the terminal device may be the relay terminal device.

In S802, the access management network element may determine the authorization result based on the authorization condition, and then send the authorization condition to the access network element.

In a possible case (referred to as Case 1 below), the authorization condition includes the authorized time range of the connection service. The access management network element may determine whether the current time is outside the authorized time range, or is in the authorized time range, to determine the authorization result.

When the current time is outside the authorized time range, the access management network element determines that the authorization result indicates that the terminal device is not allowed to provide the service. When the current time is in the authorized time range, the access management network element determines that the authorization result indicates that the terminal device is allowed to provide the service.

In another possible case (referred to as Case 2 below), the authorization condition includes the authorized location range of the connection service. The access management network element may determine whether the terminal device is outside the authorized location range, or is in the authorized location range, to determine the authorization result.

When the terminal device is outside the authorized location range, the access management network element determines that the authorization result indicates that the terminal device is not allowed to provide the connection service. When the terminal device is in the authorized location range, the access management network element determines that the authorization result indicates that the terminal device is allowed to provide the connection service.

If the terminal device has mobility, for example, the terminal device is a VMR, when the terminal device moves out of the authorized location range, the terminal device is outside the authorized location range; or when the terminal device moves into the authorized location range, the terminal device is in the authorized location range.

The authorized location range includes one or more of the following: an authorized path of the connection service, an authorized area of the connection service, an area in which the connection service is allowed to be provided, or an area in which the connection service is not allowed to be provided. The authorized area of the connection service may include one or more complete TAs. If the authorized area of the connection service is geographical location information, the AMF maps the geographical location information to the TA. The authorized area of the connection service may further include one or more cells. For example, an identifier of each cell may be a cell global identifier (cell global identifier, CGI).

In still another possible case (referred to as Case 3 below), the authorization condition includes the authorized location range of the connection service and the authorized time range of the connection service. The access management network element may determine whether the current time is outside the authorized time range (or is in the authorized time range), and whether the terminal device is outside the authorized location range (or is in the authorized location range), to determine the authorization result.

When the current time is outside the authorized time range, and/or the terminal device is outside the authorized location range, the access management network element determines that the authorization result indicates that the terminal device is not allowed to provide the connection service. When the current time is in the authorized time range, and the terminal device is in the authorized location range, the access management network element determines that the authorization result indicates that the terminal device is allowed to provide the connection service. The following mainly describes some implementations in Case 2.

In an implementation, the access management network element may determine, based on the location of the terminal device and the authorized location range, whether the terminal device is outside the authorized location range, or is in the authorized location range.

In this implementation, the location of the terminal device may be a real-time location obtained through estimation by a location management network element (for example, an LMF). The access management network element may obtain the location of the terminal device from the location management network element. For example, refer to S604 to S606 in FIG. 6, or S706 to S708 in FIG. 7. Optionally, the location of the terminal device may be a location in the authorized time range. For example, the access management network element sends a location determining request message to the location management network element. The location determining request message is used to request the location of the terminal device. The location determining request message may carry the authorized time range, and the location management network element may obtain the location of the terminal device in the authorized time range.

For example, in the IAB scenario, the authorized location range includes the authorized path (authorized path) of the connection service and the authorized area (authorized area) of the connection service. In the L2 relay scenario, the authorized location range includes the area in which the connection service is allowed to be provided (an allowed area) and the area in which the connection service is not allowed to be provided (a non-allowed area).

In another implementation, the location management network element determines whether the terminal device is outside the authorized location range, or is in the authorized location range, and then notifies the access management network element of a determining result.

Specifically, the access management network element may send a request message to the location management network element (for example, refer to S604 in FIG. 6 or S706 in FIG. 7). The request message includes information about the authorized location range, and is used to request whether the terminal device is outside the authorized location range, or is in the authorized location range. The location management network element sends notification information to the access management network element (for example, refer to S606 in FIG. 6 or S708 in FIG. 7). The notification information is used to notify that the terminal device is outside the authorized location range, or the terminal device is in the authorized location range.

Optionally, the request message may include the authorized time range.

In still another implementation, the access management network element determines, based on a tracking area in which the terminal device is located, whether the terminal device is outside the authorized location range, or is in the authorized location range.

Specifically, the access management network element may receive a tracking area range corresponding to the authorized location range (for example, the authorized location range is the tracking area range, or a network exposure network element converts the authorized location range into the tracking area range), and the access management network element has known the tracking area in which the terminal device is located. If the tracking area in which the terminal device is located is outside the tracking area range corresponding to the authorized location range (in other words, the tracking area range corresponding to the authorized location range does not include the tracking area in which the terminal device is located), it represents that the terminal device is outside the authorized location range. If the tracking area in which the terminal device is located is in the tracking area range corresponding to the authorized location range (in other words, the tracking area range corresponding to the authorized location range includes the tracking area in which the terminal device is located), it represents that the terminal device is in the authorized location range. In this implementation, the access management network element may request the network exposure network element to map the authorized location range to the tracking area range. For another example, when allocating a registration area (Registration Area) to the terminal device, the access management network element may consider the tracking area range corresponding to the authorized location range. If the terminal device is in the authorized location range, the registration area includes a group of TAs that belong to the tracking area range corresponding to the authorized location range. If the terminal device is outside the authorized location range, the registration area includes a group of TAs that do not belong to the tracking area range corresponding to the authorized location range. Further, the access management network element may know, by using a mobility registration update mechanism (Mobility Registration Update mechanism), that the terminal device is in the authorized location range, or is outside the authorized location range.

In still another implementation, the access management network element determines, based on a cell in which the terminal device is located, whether the terminal device is outside the authorized location range, or is in the authorized location range.

Specifically, the access management network element may receive a cell list corresponding to the authorized location range (for example, the authorized location range is the cell list, or a network exposure network element converts the authorized location range into the cell list), and the access management network element has known the cell in which the terminal device is located. If the cell in which the terminal device is located is outside the cell list corresponding to the authorized location range (in other words, the cell list corresponding to the authorized location range does not include the cell in which the terminal device is located), it represents that the terminal device is outside the authorized location range. If the cell in which the terminal device is located is in the cell list corresponding to the authorized location range (in other words, the cell list corresponding to the authorized location range includes the cell in which the terminal device is located), it represents that the terminal device is in the authorized location range.

In S802, the access network element may control the connection service of the terminal device based on the received authorization result.

Optionally, the access management network element may further send the authorization result to the terminal device.

For the terminal device, the terminal device may perform a corresponding operation based only on the authorization result sent by the access management network element. For example, the terminal device receives a first authorization result sent by the access management network element. The first authorization result indicates that the terminal device is not allowed to provide the connection service. The terminal device releases, based on the first authorization result, a resource for providing the connection service. For another example, the terminal device receives a second authorization result sent by the access management network element. The second authorization result indicates that the terminal device is allowed to provide the connection service. The terminal device provides the connection service based on the second authorization result.

Alternatively, the terminal device may perform a corresponding operation based only on control of the access network element. For example, the terminal device receives a connection control message sent by the access network element. The connection control message is used to control the terminal device not to provide the connection service. The terminal device releases, based on the connection control message, a resource for providing the connection service. For another example, the connection control message is alternatively used to provide the connection service. The terminal device provides the connection service based on the connection control message. Alternatively, the terminal device may perform a corresponding operation based on control of the access network element and the authorization result sent by the access management network element. Generally, the control of the access network element is consistent with the authorization result from the access management network element. In other words, the terminal device performs a same operation. Certainly, to avoid that the control of the access network element is inconsistent with the authorization result of the access management network element, a priority of the control result of the access network element and a priority of the authorization result of the access management network element may be set. For example, the priority of the control result of the access network element is higher than the priority of the authorization result sent by the access management network element.

For example, when releasing a resource for providing the connection service, the terminal device may release an F1 interface. The F1 interface is for information transmission between the terminal device and the access network element. "Information" herein includes data and/or signaling. Optionally, when the authorization result indicates that the terminal device is not allowed to provide the connection service, the access management network element sends a deregistration request message (Deregistration Request message) to the terminal device. For example, the deregistration request message may include indication information that the terminal device is not allowed to provide the connection service. After receiving the deregistration request message, the terminal device releases the resource for providing the connection service.

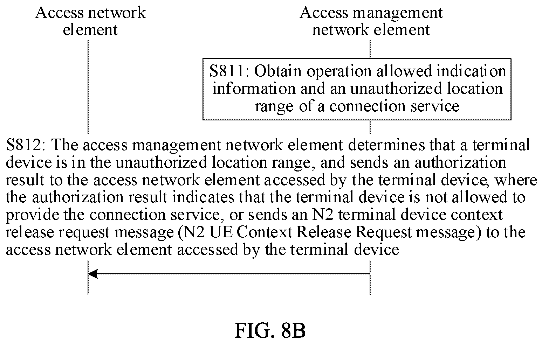

In another implementation, the access management network element may obtain an unauthorized location range (or a forbidden area) of the connection service. When the terminal is in the unauthorized location range (or the forbidden area), the terminal device is not allowed to provide the connection service, to flexibly and dynamically control and manage a case that the terminal device provides the connection service. FIG. 8B is a diagram of another authorization method according to an embodiment of this application. The method includes the following steps.

S811: An access management network element obtains operation allowed indication information and an unauthorized location range of a connection service.

The operation allowed indication information indicates that a terminal device is allowed to provide the connection service.

The unauthorized location range of the connection service is a forbidden area (Forbidden Area). For example, the forbidden area is included in access and mobility subscription data.

The access management network element may obtain the operation allowed indication information and the unauthorized location range of the connection service from a data management network element or a policy control network element.

S812: The access management network element determines that the terminal device is in the unauthorized location range (or the forbidden area), and sends an authorization result to an access network element accessed by the terminal device, where the authorization result indicates that the terminal device is not allowed to provide the connection service, or sends an N2 terminal device context release request message (N2 UE Context Release Request message) to an access network element accessed by the terminal device. For example, the N2 terminal context release request message may include indication information that the terminal device is not allowed to provide the connection service. Correspondingly, the access network element receives the authorization result or the N2 terminal device context release request message.

In this example, the access management network element may further send the authorization result to the terminal device. Alternatively, when the authorization result indicates that the terminal device is not allowed to provide the connection service, the access management network element sends a deregistration request message (Deregistration Request message) to the terminal device. For example, the deregistration request message may include the indication information that the terminal device is not allowed to provide the connection service. After receiving the deregistration request message, the terminal device releases a resource for providing the connection service.

A process in which the access management network element determines that the terminal device is in the forbidden area in S812 is similar to a process in which the access management network element determines that the terminal device is outside the authorized location range, or is in the authorized location range in S802. Repeated content is not described. Differences are as follows. When the terminal device is in the forbidden area, the access management network element determines that the terminal device is not allowed to provide the connection service. When the terminal device is outside the forbidden area, the access management network element determines that the terminal device is allowed to provide the connection service.

The following describes the authorization procedure shown in FIG. 8A with reference to an example.

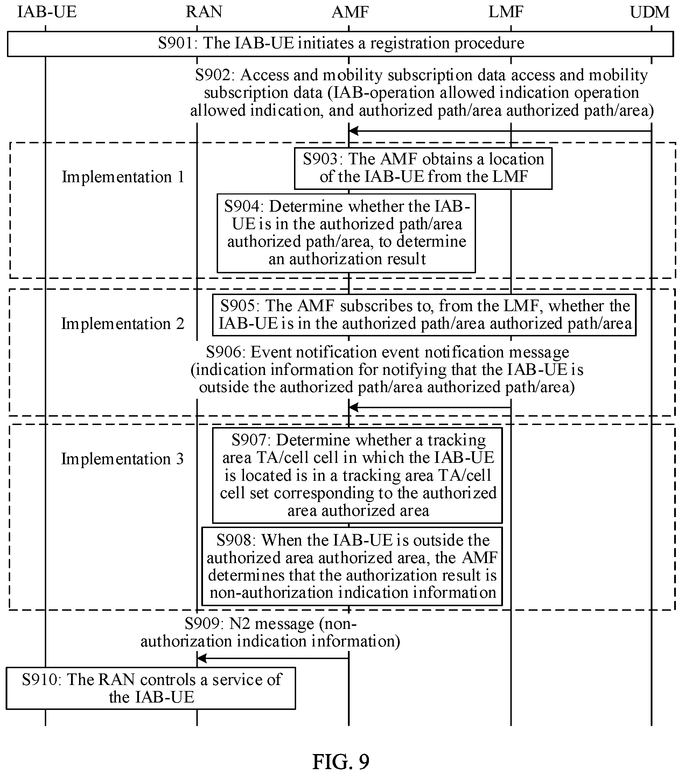

FIG. 9 is a schematic flowchart of authorization in an IAB scenario. The following steps are included.

S901: IAB-UE initiates a registration procedure.

S902: A UDM sends access and mobility subscription data to an AMF, where the access and mobility subscription data includes an IAB-operation allowed indication and an authorized path/area.

The IAB-operation allowed indication is an example of the foregoing operation allowed indication information, and the authorized path/area is an example of the foregoing authorized location range. Optionally, the access and mobility subscription data further includes a validity period (validity period). The validity period is an example of the foregoing authorized time range.

S903: The AMF obtains a location of the IAB-UE from an LMF.

For example, refer to S604 to S606 in FIG. 6, or refer to S706 to S708 in FIG. 7.

S904: The AMF determines whether the IAB-UE is in the authorized path/area, to determine an authorization result.

When the IAB-UE is outside the authorized path/area, it is determined that the authorization result is non-authorization indication information. The non-authorization indication information indicates that the IAB-UE is not authorized, in other words, the IAB-UE is not allowed to provide a connection service. In this example, a case in which the IAB-UE is outside the authorized path/area is mainly described.

When the IAB-UE is in the authorized path/area, it is determined that the authorization result is authorization indication information. The authorization indication information indicates that the IAB-UE is authorized, in other words, the IAB-UE is allowed to provide a connection service. S903 and S904 are possible Implementation 1.

S905: The AMF subscribes to, from the LMF, whether the IAB-UE is in the authorized path/area. The LMF determines that the IAB-UE is outside the authorized path/area. Alternatively, the LMF determines that the IAB-UE is in the authorized path/area.

S906: The LMF sends an event notification (event notification) message to the AMF, where the event notification message includes indication information for notifying that the IAB-UE is outside the authorized path/area.

If the LMF determines that the IAB-UE is in the authorized path/area, the event notification message includes indication information for notifying that the IAB-UE is in the authorized path/area.

S905 and S906 are possible Implementation 2.

S907: The AMF determines whether a TA/cell in which the IAB-UE is located is in a TA/cell set corresponding to the authorized area.

When the TA in which the IAB-UE is located is outside a TA range corresponding to the authorized area, the AMF determines that the IAB-UE is outside the authorized area.

When the cell in which the IAB-UE is located is outside a cell list corresponding to the authorized area, the AMF determines that the IAB-UE is outside the authorized area.

When the TA in which the IAB-UE is located is in a TA range corresponding to the authorized area, the AMF determines that the IAB-UE is in the authorized area.

When the cell in which the IAB-UE is located is in a cell list corresponding to the authorized area, the AMF determines that the IAB-UE is in the authorized area.

S908: When the IAB-UE is outside the authorized area, the AMF determines that the authorization result is the non-authorization indication information.

S907 and S908 are possible Implementation 3. An authorization granularity in S907 and S908 is the authorized area.

S909: The AMF sends an N2 message to a RAN. When the IAB-UE is outside the authorized path/area, the N2 message includes the non-authorization indication information.

When the IAB-UE is in the authorized path/area, the N2 message includes the authorization indication information.

Optionally, when the IAB-UE is outside the authorized path/area, the AMF may initiate the registration procedure of the IAB-UE or release a NAS connection.

It may be understood that, when the IAB-operation allowed indication indicates that the IAB-UE is authorized, the AMF sends the non-authorization indication information to the RAN when determining that the IAB-UE is outside the authorized path/area. When the RAN does not obtain that the IAB-UE is authorized, or is not authorized, the RAN considers by default that the IAB-UE is not authorized.

S910: The RAN controls a service of the IAB-UE based on the N2 message.

When the N2 message includes the non-authorization indication information, the RAN may not allow the IAB-UE to serve as an IAB-node to provide an IAB service, may release a resource used by the IAB-UE to provide an IAB service, may release the IAB-UE to serve as an F1 interface of a DU, or may not allow the IAB-UE to serve as a DU to request to set up an F1 interface.

In this example, the AMF does not authorize the IAB-UE to provide the IAB service when the IAB-UE is outside a specific path/area, and may dynamically update an IAB-UE authorized indication. The RAN controls the IAB service of the IAB-UE based on an updated non-authorization indication, to avoid interference to existing communication caused by providing the IAB service by the IAB-UE in an unauthorized area (or in unauthorized time).

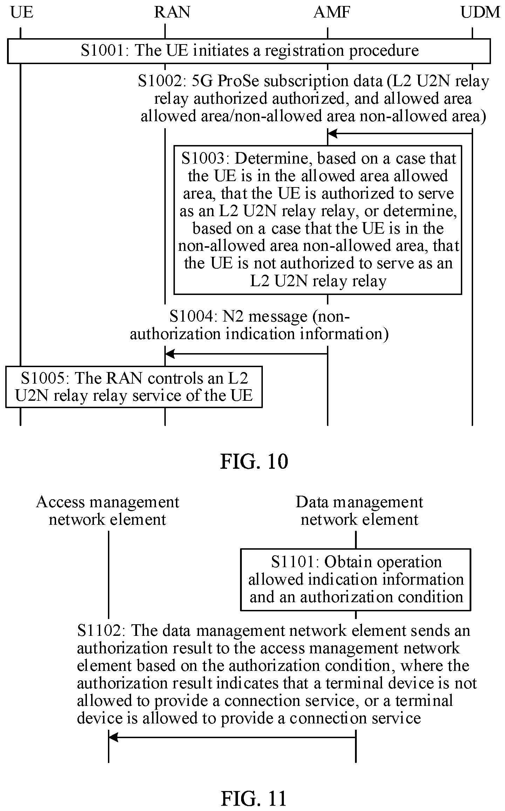

FIG. 10 is a schematic flowchart of authorization in an L2 relay scenario. The following steps are included.

S1001: UE initiates a registration procedure.

S1002: A UDM sends 5G ProSe subscription data to an AMF. The 5G ProSe subscription data includes L2 UE-to-network (UE-to-network, U2N) relay authorized and an allowed area (or a non-allowed area).

The "L2 U2N relay authorized" indicates that the UE is allowed to provide an L2 U2N relay service. S1003: The AMF determines, based on a case that the UE is in the allowed area, that the UE is authorized to serve as an L2 U2N relay, or determines, based on a case that the UE is in the non-allowed area, that the UE is not authorized to serve as an L2 U2N relay.

For implementation of S1003, refer to the implementation in Case 2. Repeated content is not described.

S 1004: The AMF sends an N2 message to a RAN. When the AMF determines that the UE is not authorized to serve as the L2 U2N relay, the N2 message includes non-authorization indication information.

When the AMF determines that the UE is authorized to serve as the L2 U2N relay, the N2 message includes authorization indication information.

When determining that the UE is not authorized to serve as the L2 U2N relay, the AMF may further initiate a NAS connection release procedure, or actively initiate an N2 connection release procedure, to trigger the UE to enter an idle state.

S 1005: The RAN controls the L2 U2N relay service of the UE based on the N2 message.

When the N2 message includes the non-authorization indication information, the RAN may not allow the L2 U2N relay service of the UE. The RAN may further release an RRC connection between the RAN and the UE.

When the N2 message includes the authorization indication information, the RAN may allow the L2 U2N relay service of the UE.

In this example, the AMF determines, with reference to a case that the UE is in the allowed area, or is in the non-allowed area, whether the UE is allowed to serve as the L2 U2N relay, and may update an authorization indication of the UE. The RAN controls the L2 U2N relay service of the UE based on an updated non-authorization indication, to avoid interference to existing communication caused by providing the L2 U2N relay service by the UE in the non-allowed area. An embodiment of this application further provides an authorization method. The authorization method is applicable to the foregoing Scenario 1 and Scenario 2. FIG. 11 is a diagram of an authorization method according to an embodiment of this application. The method includes the following steps.

S 1101: A data management network element obtains operation allowed indication information and an authorization condition.

The operation allowed indication information indicates that a terminal device is allowed to provide a connection service.

The authorization condition is used to determine whether the terminal device is allowed to provide the connection service. For example, the authorization condition includes an authorized location range of the connection service and/or an authorized time range of the connection service.

S1102: The data management network element sends an authorization result to an access management network element based on the authorization condition. Correspondingly, the access management network element receives the authorization result.

The authorization result indicates that the terminal device is not allowed to provide the connection service, or the terminal device is allowed to provide the connection service.

According to the foregoing solution, the data management network element may determine, based on the obtained authorization condition, whether a location of the terminal device and/or current time meet/meets the authorization condition, and send a corresponding authorization result to the access management network element. Even if the operation allowed indication information allows the terminal device to provide the connection service, the data management network element does not allow the terminal device to provide the connection service when the authorization condition is not met. This can flexibly and dynamically control and manage a case that the terminal device provides the connection service. According to the foregoing solution, this can avoid that a service is provided outside the authorized location range and/or the authorized time range, to avoid interference to existing communication to some extent.

In an implementation, the data management network element stores subscription data. The subscription data includes the operation allowed indication information and the authorization condition. A similarity between an authorization process of the data management network element and an authorization process of the access management network element is not described herein. In another implementation, the data management network element obtains subscription data from a universal data repository (universal data repository, UDR). The subscription data includes the operation allowed indication information and the authorization condition. The UDR provides a unified data repository service.

In S 1102, the data management network element may determine the authorization result based on the authorization condition, and then send the authorization result to the access management network element.

Optionally, when the authorization result indicates that the terminal device is not allowed to provide the connection service, the data management network element may not send the authorization result to the access management network element. When obtaining no authorization result, the access management network element learns that the terminal device is not allowed to provide the connection service.

Optionally, when determining that the terminal device is not allowed to provide the connection service, the access management network element sends a deregistration request message (Deregistration Request message) to the terminal device. For example, the deregistration request message may include indication information that the terminal device is not allowed to provide the connection service. After receiving the deregistration request message, the terminal device releases a resource for providing the connection service.

In a possible case (referred to as Case 1 below), the authorization condition includes the authorized time range of the connection service. The data management network element may determine whether the current time is outside the authorized time range, or is in the authorized time range, to determine the authorization result.

When the current time is outside the authorized time range, the data management network element determines that the authorization result indicates that the terminal device is not allowed to provide the service. When the current time is in the authorized time range, the data management network element determines that the authorization result indicates that the terminal device is allowed to provide the service.

In another possible case (referred to as Case 2 below), the authorization condition includes the authorized location range of the connection service. The data management network element may determine whether the terminal device is outside the authorized location range, or is in the authorized location range, to determine the authorization result.

When the terminal device is outside the authorized location range, the data management network element determines that the authorization result indicates that the terminal device is not allowed to provide the connection service. When the terminal device is in the authorized location range, the data management network element determines that the authorization result indicates that the terminal device is allowed to provide the connection service.

If the terminal device has mobility, for example, the terminal device is a VMR, when the terminal device moves out of the authorized location range, the terminal device is outside the authorized location range; or when the terminal device moves into the authorized location range, the terminal device is in the authorized location range.

In still another possible case (referred to as Case 3 below), the authorization condition includes the authorized location range of the connection service and the authorized time range of the connection service. The data management network element may determine whether the current time is outside the authorized time range (or is in the authorized time range), and whether the terminal device is outside the authorized location range (or is in the authorized location range), to determine the authorization result.

When the current time is outside the authorized time range, and/or the terminal device is outside the authorized location range, the data management network element determines that the authorization result indicates that the terminal device is not allowed to provide the connection service. When the current time is in the authorized time range, and the terminal device is in the authorized location range, the data management network element determines that the authorization result indicates that the terminal device is allowed to provide the connection service.

The following mainly describes some implementations in Case 2.

In an implementation, the data management network element may determine, based on the location of the terminal device and the authorized location range, whether the terminal device is outside the authorized location range, or is in the authorized location range.

In this implementation, the location of the terminal device may be a real-time location obtained through estimation by a network mobile location center (for example, a GMLC). The data management network element may obtain the location of the terminal device from the network mobile location center. Optionally, the location of the terminal device may be a location in the authorized time range. For example, the data management network element sends a location determining request message to the network mobile location center. The location determining request message is used to request the location of the terminal device. The location determining request message may carry the authorized time range, and the network mobile location center may obtain the location of the terminal device in the authorized time range.

For example, in an IAB scenario, the authorized location range includes an authorized path (authorized path) of the connection service and an authorized area (authorized area) of the connection service. In an L2 relay scenario, the authorized location range includes an area in which the connection service is allowed to be provided (an allowed area) and an area in which the connection service is not allowed to be provided (a non-allowed area).

In another implementation, the data management network element determines whether the terminal device is outside the authorized location range, or is in the authorized location range, and then notifies the access management network element of a determining result.

Specifically, the data management network element may send a request message to the network mobile location center. The request message includes information about the authorized location range. The request message is used to request whether the terminal device is outside the authorized location range, or is in the authorized location range. The network mobile location center sends notification information to the data management network element. The notification information is used to notify that the terminal device is outside the authorized location range, or the terminal device is in the authorized location range.

Optionally, the request message may include the authorized time range.

In another implementation, in S1101, the data management network element may obtain an unauthorized location range (or a forbidden area) of the connection service. When the terminal is in the unauthorized location range (or the forbidden area), the data management network element does not allow the terminal device to provide the connection service, to flexibly and dynamically control and manage a case that the terminal device provides the connection service.

A process in which the data management network element determines that the terminal device is in the forbidden area is similar to a process in which the data management network element determines that the terminal device is outside the authorized location range, or is in the authorized location range in S1102. Repeated content is not described. Differences are as follows. When the terminal device is in the forbidden area, the data management network element determines that the terminal device is not allowed to provide the connection service. When the terminal device is outside the forbidden area, the data management network element determines that the terminal device is allowed to provide the connection service.

The following describes the authorization procedure shown in FIG. 11 with reference to an example.

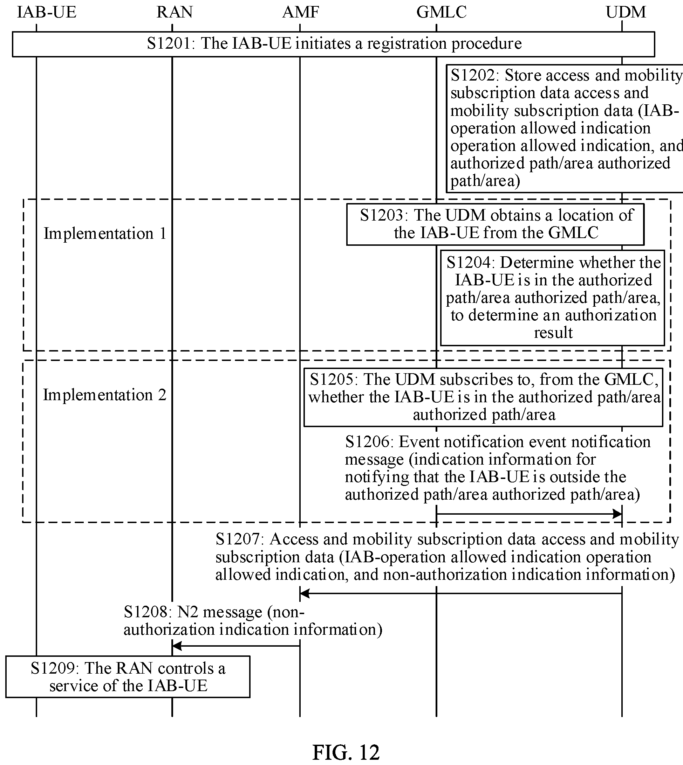

FIG. 12 is a schematic flowchart of authorization in an IAB scenario. The following steps are included.

S1201: IAB-UE initiates a registration procedure.

S1202: A UDM stores access and mobility subscription data, where the access and mobility subscription data includes an IAB-operation allowed indication and an authorized path/area.

The IAB-operation allowed indication is an example of the foregoing operation allowed indication information, and the authorized path/area is an example of the foregoing authorized location range. Optionally, the access and mobility subscription data further includes a validity period (validity period). The validity period is an example of the foregoing authorized time range.

S1203: The UDM obtains a location of the IAB-UE from a GMLC.

S1204: The DUM determines whether the IAB-UE is in the authorized path/area, to determine an authorization result.

When the IAB-UE is outside the authorized path/area, it is determined that the authorization result is non-authorization indication information. The non-authorization indication information indicates that the IAB-UE is not authorized, in other words, the IAB-UE is not allowed to provide a connection service. In this example, a case in which the IAB-UE is outside the authorized path/area is mainly described.

When the IAB-UE is in the authorized path/area, it is determined that the authorization result is authorization indication information. The authorization indication information indicates that the IAB-UE is authorized, in other words, the IAB-UE is allowed to provide a connection service. S1203 and S1204 are possible Implementation 1.

S1205: The UDM subscribes to, from the GMLC, whether the IAB-UE is in the authorized path/area.

The GMLC determines that the IAB-UE is outside the authorized path/area. Alternatively, the GMLC determines that the IAB-UE is in the authorized path/area.

S1206: The GMLC sends an event notification (event notification) message to the UDM, where the event notification message includes indication information for notifying that the IAB-UE is outside the authorized path/area.

If the GMLC determines that the IAB-UE is in the authorized path/area, the event notification message includes indication information for notifying that the IAB-UE is in the authorized path/area.

S1205 and S1206 are possible Implementation 2.

S1207: The UDM sends the access and mobility subscription data to an AMF, where the access and mobility subscription data includes the IAB-operation allowed indication and the non-authorization indication information.

S1208: The AMF sends an N2 message to a RAN. When the IAB-UE is outside the authorized path/area, the N2 message includes the non-authorization indication information.

When the IAB-UE is in the authorized path/area, the N2 message includes the authorization indication information.

S1209: The RAN controls a service of the IAB-UE based on the N2 message.

In this example, the UDM does not authorize the IAB-UE to provide an IAB service when the IAB-UE is outside a specific path/area, and may dynamically update an IAB-UE authorized indication. The RAN controls the IAB service of the IAB-UE based on an updated non-authorization indication, to avoid interference to existing communication caused by providing the IAB service by the IAB-UE in an unauthorized area (or in unauthorized time).

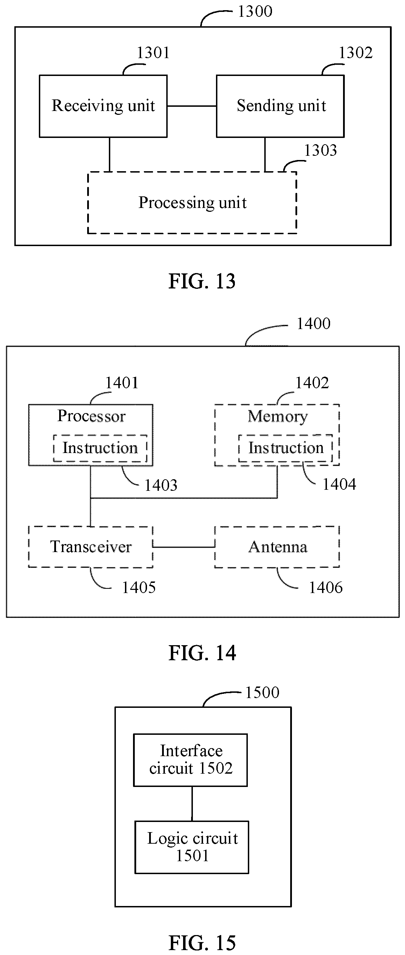

Based on a same technical concept as the foregoing authorization method, an embodiment of this application further provides a communication apparatus. As shown in FIG. 13, a communication apparatus 1300 includes a receiving unit 1301 and a sending unit 1302. Optionally, functions implemented by the receiving unit 1301 and the sending unit 1302 may be implemented by a communication interface. The receiving unit and the sending unit may be integrated into a transceiver unit. The communication apparatus 1300 may be an access management network element, a data management network element, or a terminal device, or may be located in the access management network element, the data management network element, or the terminal device. The communication apparatus 1300 may be configured to implement the methods described in the foregoing method embodiments. For example, the communication apparatus 1300 can perform the steps performed by the access management network element, the data management network element, or the terminal device in the methods in FIG. 8A to FIG. 12.

In a possible embodiment, the communication apparatus 1300 is used in the access management network element.

For example, the receiving unit 1301 is configured to obtain operation allowed indication information and an authorization condition. The operation allowed indication information indicates that the terminal device is allowed to provide a connection service, and the authorization condition includes an authorized location range of the connection service and/or an authorized time range of the connection service. The sending unit 1302 is configured to send, based on the authorization condition, an authorization result to an access network element accessed by the terminal device. The authorization result indicates that the terminal device is not allowed to provide the connection service, or the terminal device is allowed to provide the connection service. In an implementation, the sending unit 1302 is specifically configured to send the authorization result to the access network element based on the authorized location range and/or the authorized time range.

In an implementation, the sending unit 1302 is further configured to send the authorization result to the terminal device.

In an implementation, the communication apparatus 1300 further includes a processing unit 1303, configured to determine the authorization result based on the authorization condition.

In an implementation, the processing unit is specifically configured to determine the authorization result based on the authorized location range and/or the authorized time range.

In an implementation, the processing unit 1303 is specifically configured to: when current time is outside the authorized time range, determine that the authorization result indicates that the terminal device is not allowed to provide the connection service; or when current time is in the authorized time range, determine that the authorization result indicates that the terminal device is allowed to provide the connection service.

In an implementation, the processing unit 1303 is specifically configured to: when the terminal device is outside the authorized location range, determine that the authorization result indicates that the terminal device is not allowed to provide the connection service; or when the terminal device is in the authorized location range, determine that the authorization result indicates that the terminal device is allowed to provide the connection service.

In an implementation, the receiving unit 1301 is further configured to receive notification information sent by a location management network element, where the notification information is used to notify that the terminal device is outside the authorized location range, or is in the authorized location range.

The processing unit 1303 is specifically configured to: when the notification information is used to notify that the terminal device is outside the authorized location range, determine that the authorization result indicates that the terminal device is not allowed to provide the connection service; or when the notification information is used to notify that the terminal device is in the authorized location range, determine that the authorization result indicates that the terminal device is allowed to provide the connection service.

In an implementation, the processing unit 1303 is specifically configured to: when a tracking area in which the terminal device is located is outside a tracking area range corresponding to the authorized location range, determine that the authorization result indicates that the terminal device is not allowed to provide the connection service; or when a tracking area in which the terminal device is located is in a tracking area range corresponding to the authorized location range, determine that the authorization result indicates that the terminal device is allowed to provide the connection service.

In an implementation, the connection service includes an integrated access and backhaul IAB service, and the terminal device is an IAB terminal device.

Alternatively, the connection service includes a vehicle-mounted relay VMR service, and the terminal device is a VMR device.

Alternatively, the connection service includes a relay service, and the terminal device is a relay relay terminal device.

In an implementation, the authorized location range includes one or more of the following: an authorized path of the connection service, an authorized area of the connection service, an area in which the connection service is allowed to be provided, or an area in which the connection service is not allowed to be provided.

In another possible embodiment, the communication apparatus 1300 is used in the terminal device. For example, the receiving unit 1301 is configured to receive a first authorization result sent by the access management network element, where the first authorization result indicates that the terminal device is not allowed to provide a connection service.

The processing unit 1303 is configured to release, based on the first authorization result, a resource for providing the connection service.

In an implementation, the processing unit 1303 is specifically configured to release an F1 interface. The F1 interface is for information transmission between the terminal device and the access network element accessed by the terminal device.

In an implementation, the receiving unit 1301 is further configured to receive a second authorization result sent by the access management network element, where the second authorization result indicates that the terminal device is allowed to provide the connection service. The processing unit 1303 is further configured to provide the connection service based on the second authorization result.

It should be noted that division into the modules in embodiments of this application is an example, and is merely logical function division. During actual implementation, there may be another division manner. In addition, functional units in embodiments of this application may be integrated into one processing unit, or may exist alone physically, or two or more units may be integrated into one unit. The foregoing integrated unit may be implemented in a form of hardware, or may be implemented in a form of a software functional unit. For example, the transceiver unit may include a receiving unit and/or a sending unit.

When the integrated unit is implemented in the form of the software functional unit and sold or used as an independent product, the integrated unit may be stored in a computer-readable storage medium. Based on such an understanding, the integrated unit may be stored in a storage medium as a computer software product, and includes several instructions for instructing a computer device (which may be a personal computer, a server, or a network device) or a processor (processor) to perform all or a part of the steps of the methods in embodiments of this application.

As shown in FIG. 14, an embodiment of this application further provides a diagram of a structure of a communication apparatus 1400. The communication apparatus 1400 may be configured to implement the methods described in the foregoing method embodiments. Refer to the descriptions in the foregoing method embodiments. For example, the communication apparatus 1400 can perform the steps performed by the access management network element, the data management network element, or the terminal device in the methods in FIG. 8A to FIG. 12.

The apparatus 1400 includes one or more processors 1401. The processor 1401 may be a general-purpose processor, a dedicated processor, or the like. For example, the processor 1401 may be a baseband processor or a central processing unit. The baseband processor may be configured to process a communication protocol and communication data. The central processing unit may be configured to: control a communication apparatus (for example, a base station, a terminal, or a chip); execute a software program; and process data of the software program. The communication apparatus may include a transceiver unit, configured to input (receive) and output (send) a signal. For example, the transceiver unit may be a transceiver or a radio frequency chip.

The apparatus 1400 includes the one or more processors 1401, and the one or more processors 1401 can implement the methods shown in the foregoing embodiments. Optionally, the processor 1401 may further implement another function in addition to the methods shown in the foregoing embodiments.

In a design, the processor 1401 may execute instructions, so that the apparatus 1400 performs the methods described in the foregoing method embodiments. All or a part of the instructions may be stored in the processor 1401. For example, all or a part of instructions 1403 may be stored in the processor 1401, or instructions 1403 are stored in the processor 1401, and instructions 1404 are stored in a memory 1402 coupled to the processor. The processor 1401 may synchronously execute the instructions 1403 and the instructions 1404, so that the apparatus 1400 performs the method described in the foregoing method embodiments. The instructions 1403 and the instructions 1404 are also referred to as computer programs.

In another possible design, the communication apparatus 1400 may further include a circuit, and the circuit may implement functions in the foregoing method embodiments.

In still another possible design, the communication apparatus 1400 may include one or more memories 1402 storing the instructions 1404. The instructions may be run on the processor 1401, so that the communication apparatus 1400 performs the methods described in the foregoing method embodiments. Optionally, the memory 1402 may further store data. Optionally, the processor 1401 may also store instructions and/or data. For example, the one or more memories 1402 may store the correspondences described in the foregoing embodiments, or the related parameters, the related tables, or the like in the foregoing embodiments. The processor and the memory may be separately disposed, or may be integrated with each other.

In still another possible design, the apparatus 1400 may further include a transceiver 1405 and an antenna 1406. The processor 1401 may be referred to as a processing unit, and controls the apparatus (the terminal or the base station). The transceiver 1405 may be referred to as a transceiver machine, a transceiver circuit, a transceiver unit, or the like, and is configured to implement a transceiver function of the apparatus by using the antenna 1406.

The processor may be a general-purpose central processing unit (central processing unit, CPU), a microprocessor, an application-specific integrated circuit (application-specific integrated circuit, ASIC), one or more integrated circuits configured to control program execution of the solutions of this application, a general-purpose processor, a digital signal processor (digital signal processor, DSP), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, any conventional processor, or the like. The steps in the methods disclosed with reference to embodiments of this application may be directly performed and completed by a hardware decoding processor, or may be performed and completed by using a combination of hardware in the decoding processor and a software module. The software module may be in a storage medium, and the storage medium is located in a memory.

The memory may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), serving as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (synchronous link DRAM, SLDRAM), and a direct rambus random access memory (Direct Rambus RAM, DR RAM). It should be noted that the memory in the systems and the methods that are described in this specification includes but is not limited to these memories and any memory of another proper type. The memory may independently exist, and may be connected to the processor through a communication line. The memory may alternatively be integrated with the processor.

An embodiment of this application further provides a computer-readable medium. The computer-readable medium stores a computer program. When the computer program is executed by a computer, the communication method in any one of the foregoing method embodiments is implemented.

An embodiment of this application further provides a computer program product, including a computer program. When the computer program is executed by a computer, the communication method in any one of the foregoing method embodiments is implemented.

An embodiment of this application further provides a communication system, including an access management network element and an access network element. The access management network element and the access network element may implement the communication method in any one of the foregoing method embodiments.

Optionally, the communication system further includes one or more of a terminal device and a data management network element. The terminal device and the data management network element may implement the communication method in any one of the foregoing method embodiments. All or a part of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer instructions are loaded and executed on a computer, the procedures or functions according to embodiments of this application are all or partially generated. The computer may be the foregoing communication apparatus. The computer instructions may be stored in a computer-readable storage medium, or may be transmitted from one computer-readable storage medium to another computer-readable storage medium. The computer-readable storage medium may be the foregoing storage medium or the foregoing memory.

In a possible design, when the foregoing communication apparatus is a chip, for example, a chip in a network device, or a chip in a terminal device, the processing unit or the processor 1401 may be one or more logic circuits, and the sending unit, the receiving unit, or the transceiver 1405 may be an input/output interface, or may be referred to as a communication interface, an interface circuit, an interface, or the like. Alternatively, the transceiver 1405 may be a sending unit and a receiving unit. The sending unit may be an output interface, and the receiving unit may be an input interface. The sending unit and the receiving unit are integrated into one unit, for example, an input/output interface. As shown in FIG. 15, a communication apparatus 1500 shown in FIG. 15 includes a logic circuit 1501 and an interface circuit 1502. In other words, the foregoing determining unit or the processor 1401 may be implemented by using the logic circuit 1501, and the sending unit, the receiving unit, or the transceiver 1405 may be implemented through the interface circuit 1502. The logic circuit 1501 may be a chip, a processing circuit, an integrated circuit, a system on chip (system on chip, SoC), or the like. The interface circuit 1502 may be a communication interface, an input/output interface, or the like. In this embodiment of this application, the logic circuit and the interface circuit may further be coupled to each other. A specific connection manner of the logic circuit and the interface circuit is not limited in this embodiment of this application.

In some embodiments of this application, the logic circuit 1501 and the interface circuit 1502 may be configured to perform a function, an operation, or the like performed by the foregoing network function or the foregoing control plane function. The interface circuit 1502 may be configured to: receive a signal from a communication apparatus other than the communication apparatus 1500 and transmit the signal to the logic circuit 1501, or send a signal from the logic circuit 1501 to a communication apparatus other than the communication apparatus 1500. The logic circuit 1501 may be configured to implement any one of the foregoing method embodiments by executing code instructions.

For example, the interface circuit 1502 is configured to receive operation allowed indication information and an authorization condition. For functions or operations performed by the communication apparatus, refer to the foregoing method embodiments. Details are not described herein again.

A person of ordinary skill in the art may be aware that in combination with the examples described in embodiments disclosed in this specification, units and algorithm steps can be implemented by electronic hardware, computer software, or a combination thereof. To clearly describe interchangeability between hardware and software, the foregoing has generally described compositions and steps of each example based on functions. Whether these functions are performed by the hardware or the software depends on particular applications and design constraint conditions of the technical solutions. A person skilled in the art may use different methods to implement the described functions for each particular application, but it should not be considered that this implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed systems, apparatuses, and methods may be implemented in other manners. For example, the foregoing described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or the units may be electrical connections, mechanical connections, or connections in another form.

The units described as separate parts may or may not be physically separate, and parts displayed as units may or may not be physical units, in other words, may be located in one place, or may be distributed on a plurality of network units. A part or all of the units may be selected based on an actual requirement to achieve the objectives of the solutions of embodiments of this application. In addition, functional units in embodiments of this application may be integrated into one processing unit, each of the units may exist alone physically, or two or more units may be integrated into one unit. The foregoing integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When this application is implemented by the software, the foregoing functions may be stored in a computer-readable medium, or transmitted as one or more instructions or code in the computer-readable medium. The computer-readable medium includes a computer storage medium and a communication medium, where the communication medium includes any medium that facilitates transmission of a computer program from one place to another. The storage medium may be any usable medium that can be accessed by a computer.

In conclusion, the foregoing descriptions are merely embodiments of the technical solutions of this application, but are not intended to limit the protection scope of this application. Any modification, equivalent replacement, or improvement made within the principle of this application shall fall within the protection scope of this application.

## Claims

1. An authorization method, wherein the method comprises:
obtaining, by an access management network element, operation allowed indication information and an authorization condition, wherein the operation allowed indication information indicates that a terminal device is allowed to provide a connection service, and the authorization condition comprises an authorized location range of the connection service and/or an authorized time range of the connection service; and
sending, by the access management network element based on the authorized location range and/or the authorized time range, an authorization result to an access network element accessed by the terminal device, wherein the authorization result indicates that the terminal device is not allowed to provide the connection service, or the terminal device is allowed to provide the connection service.

2. The method according to claim 1, wherein the method further comprises:
sending, by the access management network element, the authorization result to the terminal device.

3. The method according to claim 2, wherein the sending, by the access management network element, the authorization result to the terminal device comprises:
when the authorization result indicates that the terminal device is not allowed to provide the connection service, sending, by the access management network element, a deregistration request message to the terminal device, wherein the deregistration request message comprises indication information that the terminal device is not allowed to provide the connection service.

4. The method according to any one of claims 1 to 3, wherein the sending, by the access management network element based on the authorized location range and/or the authorized time range, an authorization result to an access network element accessed by the terminal device comprises:
determining, by the access management network element, the authorization result based on the authorized location range and/or the authorized time range, and sending the authorization result to the access network element.

5. The method according to claim 4, wherein the determining, by the access management network element, the authorization result based on the authorized time range comprises:
when current time is outside the authorized time range, determining, by the access management network element, that the authorization result indicates that the terminal device is not allowed to provide the connection service; or
when current time is in the authorized time range, determining, by the access management network element, that the authorization result indicates that the terminal device is allowed to provide the connection service.

6. The method according to claim 4, wherein the determining, by the access management network element, the authorization result based on the authorized location range comprises:
when the terminal device is outside the authorized location range, determining, by the access management network element, that the authorization result indicates that the terminal device is not allowed to provide the connection service; or
when the terminal device is in the authorized location range, determining, by the access management network element, that the authorization result indicates that the terminal device is allowed to provide the connection service.

7. The method according to claim 4, wherein the determining, by the access management network element, the authorization result based on the authorized location range comprises:
receiving, by the access management network element, notification information sent by a location management network element, wherein the notification information is used to notify that the terminal device is outside the authorized location range, or is in the authorized location range; and
when the notification information is used to notify that the terminal device is outside the authorized location range, determining, by the access management network element, that the authorization result indicates that the terminal device is not allowed to provide the connection service; or
when the notification information is used to notify that the terminal device is in the authorized location range, determining, by the access management network element, that the authorization result indicates that the terminal device is allowed to provide the connection service.

8. The method according to claim 4, wherein the determining, by the access management network element, the authorization result based on the authorized location range comprises:
when a tracking area in which the terminal device is located is outside a tracking area range corresponding to the authorized location range, determining, by the access management network element, that the authorization result indicates that the terminal device is not allowed to provide the connection service; or
when a tracking area in which the terminal device is located is in a tracking area range corresponding to the authorized location range, determining, by the access management network element, that the authorization result indicates that the terminal device is allowed to provide the connection service.

9. The method according to any one of claims 1 to 8, wherein
the connection service comprises an integrated access and backhaul IAB service, and the terminal device is an IAB terminal device;
the connection service comprises a mobile base station relay service, and the terminal device is a mobile base station relay device; or
the connection service comprises a relay service, and the terminal device is a relay relay terminal device.

10. The method according to any one of claims 1 to 9, wherein the authorized location range comprises one or more of the following: an authorized path of the connection service, an authorized area of the connection service, an area in which the connection service is allowed to be provided, or an area in which the connection service is not allowed to be provided.

11. An authorization method, wherein the method comprises:
receiving, by a terminal device, a first authorization result sent by an access management network element, wherein the first authorization result indicates that the terminal device is not allowed to provide a connection service; and
releasing, by the terminal device based on the first authorization result, a resource for providing the connection service.

12. The method according to claim 11, wherein the releasing a resource for providing the connection service comprises:
releasing, by the terminal device, an F1 interface, wherein the F1 interface is for information transmission between the terminal device and an access network element accessed by the terminal device.

13. The method according to claim 11, wherein the method further comprises:
receiving, by the terminal device, a second authorization result sent by the access management network element, wherein the second authorization result indicates that the terminal device is allowed to provide the connection service; and
providing, by the terminal device, the connection service based on the second authorization result.

14. An authorization method, wherein the method comprises:
receiving, by a terminal device, a connection control message sent by an access network element accessed by the terminal device, wherein the connection control message is used to control the terminal device not to provide a connection service; and
releasing, by the terminal device based on the connection control message, a resource for providing the connection service.

15. The method according to claim 14, wherein the releasing a resource for providing the connection service comprises:
releasing, by the terminal device, an F1 interface, wherein the F1 interface is for information transmission between the terminal device and the access network element.

16. The method according to claim 14 or 15, wherein the connection control message is alternatively used to control the terminal device to provide the connection service; and the method further comprises:
providing, by the terminal device, the connection service based on the connection control message.

17. A communication apparatus, wherein the apparatus comprises:
a receiving unit, configured to obtain operation allowed indication information and an authorization condition, wherein the operation allowed indication information indicates that a terminal device is allowed to provide a connection service, and the authorization condition comprises an authorized location range of the connection service and/or an authorized time range of the connection service; and
a sending unit, configured to send, based on the authorized location range and/or the authorized time range, an authorization result to an access network element accessed by the terminal device, wherein the authorization result indicates that the terminal device is not allowed to provide the connection service, or the terminal device is allowed to provide the connection service.

18. The apparatus according to claim 17, wherein the sending unit is further configured to send the authorization result to the terminal device.

19. The apparatus according to claim 18, wherein the sending unit is specifically configured to: when the authorization result indicates that the terminal device is not allowed to provide the connection service, send a deregistration request message to the terminal device, wherein the deregistration request message comprises indication information that the terminal device is not allowed to provide the connection service.

20. The apparatus according to any one of claims 17 to 19, wherein the apparatus further comprises:
a processing unit, configured to determine the authorization result based on the authorization condition.

21. The apparatus according to claim 20, wherein the processing unit is specifically configured to: when current time is outside the authorized time range, determine that the authorization result indicates that the terminal device is not allowed to provide the connection service; or when current time is in the authorized time range, determine that the authorization result indicates that the terminal device is allowed to provide the connection service.

22. The apparatus according to claim 20, wherein the processing unit is specifically configured to: when the terminal device is outside the authorized location range, determine that the authorization result indicates that the terminal device is not allowed to provide the connection service; or when the terminal device is in the authorized location range, determine that the authorization result indicates that the terminal device is allowed to provide the connection service.

23. The apparatus according to claim 20, wherein the receiving unit is further configured to receive notification information sent by a location management network element, wherein the notification information is used to notify that the terminal device is outside the authorized location range, or is in the authorized location range; and
the processing unit is specifically configured to: when the notification information is used to notify that the terminal device is outside the authorized location range, determine that the authorization result indicates that the terminal device is not allowed to provide the connection service; or when the notification information is used to notify that the terminal device is in the authorized location range, determine that the authorization result indicates that the terminal device is allowed to provide the connection service.

24. The apparatus according to claim 20, wherein the processing unit is specifically configured to: when a tracking area in which the terminal device is located is outside a tracking area range corresponding to the authorized location range, determine that the authorization result indicates that the terminal device is not allowed to provide the connection service; or when a tracking area in which the terminal device is located is in a tracking area range corresponding to the authorized location range, determine that the authorization result indicates that the terminal device is allowed to provide the connection service.

25. The apparatus according to any one of claims 17 to 24, wherein
the connection service comprises an integrated access and backhaul IAB service, and the terminal device is an IAB terminal device;
the connection service comprises a vehicle-mounted relay VMR service, and the terminal device is a VMR device; or
the connection service comprises a mobile base station relay service, and the terminal device is a mobile base station relay device.

26. The apparatus according to any one of claims 17 to 25, wherein the authorized location range comprises one or more of the following: an authorized path of the connection service, an authorized area of the connection service, an area in which the connection service is allowed to be provided, or an area in which the connection service is not allowed to be provided.

27. A communication apparatus, wherein the apparatus comprises:
a receiving unit, configured to receive a first authorization result sent by an access management network element, wherein the first authorization result indicates that a terminal device is not allowed to provide a connection service; and
a processing unit, configured to release, based on the first authorization result, a resource for providing the connection service.

28. The apparatus according to claim 27, wherein the processing unit is specifically configured to release an F1 interface, wherein the F1 interface is for information transmission between the terminal device and an access network element accessed by the terminal device.

29. The apparatus according to claim 27, wherein the receiving unit is further configured to receive a second authorization result sent by the access management network element, wherein the second authorization result indicates that the terminal device is allowed to provide the connection service; and
the processing unit is alternatively configured to provide the connection service based on the second authorization result.

30. A communication apparatus, wherein the apparatus comprises:
a receiving unit, configured to receive a connection control message sent by an access network element accessed by a terminal device, wherein the connection control message is used to control the terminal device not to provide a connection service; and
a processing unit, configured to release, based on the connection control message, a resource for providing the connection service.

31. The apparatus according to claim 30, wherein the processing unit is specifically configured to release an F1 interface, wherein the F1 interface is for information transmission between the terminal device and the access network element.

32. The apparatus according to claim 30 or 31, wherein the connection control message is alternatively used to control the terminal device to provide the connection service; and the processing unit is alternatively configured to provide the connection service based on the connection control message.

33. A communication apparatus, comprising a processor, wherein the processor is coupled to a memory; and
the processor is configured to execute a computer program or instructions stored in the memory, to enable the apparatus to perform the method according to any one of claims 1 to 16.

34. A communication apparatus, comprising a logic circuit and an interface circuit, wherein the interface circuit is configured to: receive a signal from a communication apparatus other than the communication apparatus and transmit the signal to the logic circuit, or send a signal from the logic circuit to a communication apparatus other than the communication apparatus, and the logic circuit is configured to implement the method according to any one of claims 1 to 16 by executing code instructions.

35. A computer-readable storage medium, comprising a computer program or instructions, wherein when the computer program or the instructions are run on a computer, the method according to any one of claims 1 to 16 is performed.

36. A computer program product, comprising a computer program or instructions, wherein when the computer program or the instructions are run on a computer, the method according to any one of claims 1 to 16 is performed.

37. A communication system, comprising an access management network element and an access network element that are configured to perform the method according to any one of claims 1 to 10.

38. A chip system, wherein the chip system comprises:
a processor and a memory, wherein the processor is coupled to the memory, and the memory is configured to store a program or instructions; and when the program or the instructions are executed by the processor, the method according to any one of claims 1 to 16 is implemented.
